Europäisches Patentamt

European Patent Office

Office européen des brevets

(19)

(11) **EP 0 490 745 B1**

(12) **FASCICULE DE BREVET EUROPEEN**

(45) Date de publication et mention
de la délivrance du brevet:
**13.03.1996 Bulletin 1996/11**

(51) Int Cl.6: **G05D 1/00**, G06F 11/16

(21) Numéro de dépôt: **91403318.8**

(22) Date de dépôt: **09.12.1991**

(54) **Procédé et système de sécurisation des informations de pilotage d'un aéronef**

Verfahren und Vorrichtung zur Verbesserung der Zuverlässigkeit von Flugzeugflugdaten

Method and apparatus to improve the reliability of aircraft flight data

(84) Etats contractants désignés:
**BE DE FR GB IT NL SE**

(30) Priorité: **14.12.1990 FR 9015687
14.12.1990 FR 9015688**

(43) Date de publication de la demande:
**17.06.1992 Bulletin 1992/25**

(73) Titulaire: **SEXTANT AVIONIQUE S.A.**
**F-92366 Meudon la Forêt Cédex (FR)**

(72) Inventeurs:
  • **Boiteau, Catherine**
    **F-75116 Paris (FR)**
  • **Parus, Roger**
    **F-75116 Paris (FR)**

(74) Mandataire: **Ballot, Paul Denis Jacques et al**
**Cabinet Ballot-Schmit,**
**7, rue Le Sueur**
**F-75116 Paris (FR)**

(56) Documents cités:
  **EP-A- 0 144 226**        **DE-A- 2 431 912**
  **FR-A- 2 396 344**        **GB-A- 2 030 334**
  **GB-A- 2 170 336**        **US-A- 3 688 099**

• **ICCON'89 IEEE INTERNATIONAL
  CONFERENCE ON CONTROL AND
  APPLICATIONS PROCEEDINGS APRIL 3-6
  1989, THE HYATT REGENCY HOTEL,
  JERUSALEM , ISRAEL CONTROL SYSTEMS
  SOCIETY,IEEE ISRAEL D. WILBERS ET AL.:
  'Detection Filters forAircraft Sensor And
  Actuator Faults' Fascicule P TA-4-3 page 1-6**

EP 0 490 745 B1

## Description

L'invention concerne les systèmes pour piloter les aéronefs et, plus particulièrement dans de tels systèmes, un procédé et un sous-système pour vérifier les informations de pilotage qui sont présentées au(x) pilote(s).

Pour piloter un aéronef, un pilote a besoin de connaître un certain nombre d'informations relatives à l'état de l'aéronef, ces informations provenant des divers équipements de bord et notamment d'un dispositif de calcul des informations de pilotage. Ces informations lui sont présentées par l'intermédiaire d'instruments traditionnels tels que des cadrans gradués, des compteurs, des afficheurs, etc. mais aussi, de plus en plus, par des images obtenues à l'aide de dispositifs de visualisation tels que tubes à rayons cathodiques, écrans plasma, diodes électroluminescentes, panneaux électroluminescents ou à cristaux liquides. Ces dispositifs de visualisation à images permettent de présenter sur une même surface plusieurs paramètres, soit de manière simultanée, soit de manière successive, soit encore à la demande du pilote, ce qui diminue le nombre d'instruments traditionnels sur le tableau de bord.

Dans certaines applications, les informations sont projetées optiquement devant les yeux du pilote, l'écran de projection étant tel qu'il permet au pilote de voir également le "paysage" dans sa ligne de visée, d'où son nom de "viseur tête haute" viseur qui peut être intégré au casque du pilote dans le cas d'aéronefs à usage militaire, et il est alors plus connu sous le nom de "viseur de casque".

Les chaînes de transmission des informations entre les capteurs et les écrans d'affichage sont longues et complexes, et comportent habituellement le dispositif de calcul des informations de pilotage signalé ci-dessus, de sorte qu'un affichage erroné n'est pas à exclure. Aussi, il est prévu que le pilote effectue des vérifications entre les indications des écrans d'affichage et celles des instruments de bord de manière à détecter les incohérences. Ces vérifications sont effectuées en cours du vol à la discrétion du pilote. De telles vérifications constituent une surcharge de travail très importante pour le pilote.

Pour détecter une information erronée sans l'intervention du pilote, il est connu de réaliser une redondance des équipements de la chaîne de transmission et de comparer les valeurs fournies par les équipements redondants à plusieurs points de la chaîne qui correspondent à des niveaux de complexité différents dans l'élaboration de l'information finale qui est affichée. La détection d'une incohérence provoque alors au moins une alarme qui est portée à la connaissance du pilote.

La redondance des équipements conduit à augmenter la complexité du système de pilotage et de navigation ainsi que le poids de l'ensemble. Il en résulte une augmentation substantielle du coût. En outre, elle ne permet pas d'effectuer un contrôle global des chaînes de transmission des informations au pilote en ne permettant pas de mettre en cause les informations fournies par les capteurs non redondants.

Par ailleurs, les vérifications qui sont effectuées tant par le pilote que par l'intermédiaire de la redondance d'équipements sont "statiques", en ce sens qu'elles comparent deux valeurs à un instant donné et ne se préoccupent pas des évolutions de l'aéronef au cours du temps.

Un but de la présente invention est donc de réaliser un système de sécurisation des informations de pilotage d'un aéronef dans lequel les vérifications de cohérence entre les informations affichées sur les écrans et celles fournies par les capteurs et le dispositif de calcul des informations de pilotage sont faites automatiquement.

Un autre but de la présente invention est aussi de réaliser un système de sécurisation des informations de pilotage d'un aéronef dans lequel les vérifications de cohérence entre les informations affichées sur les écrans et celles des instruments de bord sont faites automatiquement et de manière continue sans l'intervention active du pilote.

Un autre but de la présente invention est également de réaliser un système de sécurisation des informations de pilotage d'un aéronef dans lequel il est tenu compte des évolutions de l'aéronef.

Encore un autre but de la présente invention est de réaliser un tel système de sécurisation sans redondance d'équipements.

L'invention concerne un procédé de sécurisation des informations de pilotage d'un aéronef, lesdites informations correspondant, d'une part, à des paramètres fournis par des capteurs et, d'autre part, à des paramètres dits de navigation fournis par un dispositif de calcul et étant présentées au pilote, soit par l'intermédiaire d'instruments de bord, soit par l'intermédiaire d'un générateur de symboles associé à un dispositif d'affichage sous la forme d'images de synthèse qui comportent un ou plusieurs réticules ainsi que des caractères alphanumériques, ledit procédé étant caractérisé en ce qu'il comprend les opérations suivantes:

(a) détection et reconnaissance des images de synthèse de manière à obtenir des signaux numériques représentatifs des informations de pilotage présentées au pilote,
(b) calcul d'un ou plusieurs paramètres de navigation et/ou paramètres capteurs à partir desdits signaux numériques,
(c) comparaison desdits paramètres calculés aux valeurs des mêmes paramètres fournis par ledit dispositif de calcul ou par les capteurs de manière à détecter les incohérences entre les paramètres comparés,
(d) élaboration d'un signal d'alarme lorsque une ou plusieurs incohérences dépassent un seuil déterminé.

L'opération (c) pourra comporter aussi une comparaison desdits paramètres calculés aux valeurs des mêmes paramètres fournis par les instruments de bord. Les signaux numériques représentatifs des informations de pilotage peuvent être fournis soit directement par le générateur de symboles, soit après traitement par le dispositif d'affichage ou l'écran de visualisation dudit dispositif d'affichage.

L'invention concerne également un système pour mettre en oeuvre le procédé décrit ci-dessus, ledit système étant caractérisé en ce qu'il comprend :

- des moyens pour fournir des signaux numériques qui sont représentatifs des informations de pilotage qui sont présentées au pilote,
- un premier calculateur pour calculer un ou plusieurs paramètres de navigation à partir desdits signaux numériques,
- un premier comparateur pour comparer les valeurs des paramètres de navigation fournies par le premier calculateur à celles des mêmes paramètres fournies par le dispositif de calcul ou par les instruments de bord et élaborer un signal d'alarme lorsque le résultat de la comparaison indique que les valeurs comparées sont différentes au-delà d'un certain seuil,
- un deuxième calculateur pour calculer un ou plusieurs paramètres capteurs à partir des valeurs des paramètres de navigation fournies soit par le dispositif de calcul, soit par le premier calculateur, et
- un deuxième comparateur pour comparer les valeurs des paramètres capteurs fournies par le deuxième calculateur à celles fournies par les capteurs correspondants ou les instruments de bord et élaborer un signal d'alarme lorsque le résultat de la comparaison indique que les valeurs comparées sont différentes au-delà d'un certain seuil.

Bien entendu, les premier et deuxième calculateurs ainsi que les premier et second comparateurs peuvent ne constituer qu'un calculateur unique.

L'invention concerne également un procédé de sécurisation des informations de pilotage d'un aéronef, lesdites informations correspondant, d'une part, à des paramètres fournis par des capteurs et, d'autre part, à des paramètres dits de navigation fournis par un dispositif de calcul et des instruments de bord, ledit procédé étant caractérisé en ce qu'il comprend les opérations suivantes:

(a) calcul à partir des paramètres de navigation $\sigma_a$, $\beta_v$, aux instants t et (t+dt) des dérivées premières $\dot{\sigma}_a$ $\dot{\beta}_v$, à l'instant t,

(b) vérification de la relation (2) définie ci-après en utilisant les valeurs des paramètres $V_p$, $\Phi_v$, $\sigma_a$ et $\beta_v$ à l'instant t et des dérivées premières $\dot{\sigma}_a$ et $\dot{\beta}_v$ à l'instant t calculées par l'opération (a), et

(c) élaboration d'un signal d'alarme lorsque ladite relation (2) n'est pas vérifiée à une précision donnée

Le procédé décrit ci-dessus peut être complété par les opérations suivantes :

(d) Calcul à partir des paramètres de navigation $\sigma_a$, $\beta_v$, $\Phi_v$ et $\alpha$ aux instants t, (t+dt) et (t+2dt) des dérivées premières $\dot{\sigma}_a$, $\dot{\beta}_v$, $\dot{\Phi}_v$ et $\dot{\alpha}$ et des dérivées secondes

$$\ddot{\sigma}_a \quad \ddot{\beta}_v \quad \text{et} \quad \ddot{\Phi}_v$$

à l'instant t,

(e) vérification des relations (4) et (6) définies ci-après en utilisant les valeurs de $V_p$, $\sigma_a$, $\beta_v$, $\Phi_v$, $\alpha$ et des dérivées premières $\dot{\sigma}_a$, $\dot{\beta}_v$, $\dot{\Phi}_v$, $\dot{\alpha}$, et secondes

$$\ddot{\sigma}_a \quad \text{et} \quad \ddot{\beta}_v \quad \text{et} \quad \ddot{\Phi}_v$$

à l'instant (t) calculées par l'opération (d), et

(f) élaboration d'un signal d'alarme lorsque l'une desdites relations (4) et (6) n'est pas vérifiée à une précision donnée.

Il peut aussi comprendre les opérations suivantes :

(g) Calcul à l'aide des relations (1), (3) et (5) des forces appliquées F, R et Z à l'aéronef à l'instant t en utilisant les valeurs des paramètres $V_p$, $\Phi_v$, $\sigma_a$, $\beta_v$, $\alpha$ à l'instant t, les valeurs des dérivées premières $\dot{V}_p$, $\dot{\Phi}_v$, $\dot{\sigma}_a$, $\dot{\beta}_v$, $\dot{\alpha}$ à l'instant t calculées à partir de $V_p$, $\Phi_v$, $\sigma_a$, $\beta_v$ et $\alpha$ aux instants t et (t+dt) et les valeurs des dérivées secondes $\ddot{\sigma}_a$ et $\ddot{\beta}_v$ à l'instant t calculées à partir de $\sigma_a$ et $\beta_v$ aux instants t, (t+dt) et (t+2dt) en utilisant les relations (15) à (22) définies ci-après;

(h) calcul à partir des paramètres de navigation $V_p$, $\Phi_v$, $\sigma_a$, $\beta_v$ et $\alpha$ à l'instant (t+dt) et des valeurs des forces appliquées obtenues par l'opération (g),

des paramètres $\dot{V}_p$, $\dot{\Phi}_v$, $\dot{\sigma}_a$, $\dot{\beta}_v$, $\dot{\alpha}$, $\ddot{\Phi}_v$, $\ddot{\sigma}_a$, $\ddot{\beta}_v$ à l'instant (t+dt) en utilisant les relations (7) à (14) définies ci-après,

(i) calcul des paramètres $\dot{V}_p$, $\dot{\Phi}_v$, $\dot{\sigma}_a$, $\dot{\beta}_v$, $\ddot{\Phi}_v$, $\dot{\alpha}\,\ddot{\sigma}_a$ et $\ddot{\beta}_v$ à l'instant (t+dt) en utilisant les valeurs des paramètres $V_p$, $\Phi_v$, $\sigma_a$, $\beta_v$ et $\alpha$ aux instants, (t+dt), (t+2dt) et (t+3dt)

(j) comparaison des valeurs des paramètres calculées par l'opération (h) avec celles calculées par l'opération (i),

(k) élaboration d'un signal d'alarme lorsque le résultat de la comparaison indique que l'une des valeurs comparées est différente au-delà d'un certain seuil.

Dans une variante, on utilise dans l'opération (g), les valeurs des paramètres $V_p$, $\Phi_v$, $\sigma_a$, $\beta_v$ et $\alpha$ à l'instant t et les valeurs des dérivées premières $\dot{V}_p$, $\dot{\Phi}_v$, $\dot{\sigma}_a$, $\dot{\beta}_v$, $\dot{\alpha}$ et des dérivées secondes $\ddot{\sigma}_a$, $\ddot{\beta}_v$ qui ont été calculées par l'opération (h) pour l'instant t.

D'autres buts, caractéristiques et avantages de la présente invention apparaîtront à la lecture de la description suivante d'un exemple particulier de réalisation, ladite description étant faite en relation avec les dessins joints dans lesquels:

- la figure 1 est un schéma montrant les différentes fonctions qui sont réalisées dans une chaîne de transmission des informations de pilotage d'un aéronef comportant le système de sécurisation desdites informations selon l'invention;
- la figure 2 illustre un exemple de réticules qui apparaissent sur un écran de visualisation et/ou qui son projetés devant les yeux du pilote par un dispositif optique approprié;
- la figure 3 est un schéma fonctionnel montrant les moyens qui peuvent être utilisés pour recueillir les signaux et/ou les informations sur lesquels seront appliquées les transformations selon la présente invention;
- la figure 4 est un schéma géométrique montrant les différents axes de référence et les angles $\Phi$, $\beta$ et $\Theta$ d'un aéronef;
- les figures 5-a, 5-b et 5-c montrent les angles $\alpha$, $\Phi$ et $\Theta$ d'un aéronef;
- les figures 6-a, 6-b, 6-c et 6-d sont des schémas géométriques montrant les angles qui sont utilisés pour l'atterrissage aux instruments;
- la figure 7 est un schéma fonctionnel d'un dispositif permettant de vérifier une première équation de cohérence dynamique;
- la figure 8 est un schéma fonctionnel d'un dispositif permettant de vérifier deux autres équations de cohérence dynamique, et
- la figure 9 est un schéma fonctionnel d'un dispositif permettant de vérifier la cohérence des paramètres de navigation et de leurs dérivées premières et secondes.

Les informations de pilotage d'un aéronef, que l'on appelle aussi paramètres de navigation, sont présentées au pilote sur une planche de bord 31 par l'intermédiaire de cadrans d'instruments de bord 14 et d'un ou plusieurs écrans de visualisation 13. Comme on l'a indiqué dans le préambule, l'image d'un écran de visualisation peut être projetée devant les yeux du pilote par un système optique approprié. Les informations présentées proviennent de capteurs 10 et d'un dispositif de calcul 11, soit directement, soit par l'intermédiaire d'un Boîtier Générateur de Symboles 12 (B.G.S.) dont l'ensemble est référencé 30. Le tableau 1 donne la liste des capteurs à bord d'un aéronef ainsi que les paramètres correspondants qui sont des mesures physiques brutes réalisées à bord de l'aéronef.

Par ailleurs, le tableau 2 donne la liste des intruments en planche de bord ainsi que les paramètres correspondants.

Les paramètres capteurs sont utilisés par certains des instruments de bord 14 (liaison 24) ou par le boîtier générateur de symboles 12 (liaison 25) pour être affichés sur l'écran de visualisation 13 (liaison 26).

Tableau 1

| CAPTEURS | PARAMETRES CAPTEURS |
|---|---|
| Tubes de Pilot | $P_S$ pression statique |
| | $P_T$ pression totale |
| Sonde de température | $T_T$ température totale |
| Sonde d'incidence | $\alpha$ incidence |
| Unité de Navigation | gisement $\beta$ |

Tableau 1   (suite)

| CAPTEURS | PARAMETRES CAPTEURS |
|---|---|
| Inertielle | site $\Theta$ |
| | roulis $\Phi$ |
| | accélérations suivant 3 axes (en repère absolu) $\sigma_N \sigma_V \sigma_E$ |
| Vanne de flux | $C_M$ cap magnétique |
| Radioaltimètre | HRS hauteur au-dessus du relief |
| Instrument | $\varepsilon_1$ écart loc |
| Landing System | $\varepsilon_g$ écart glide |
| (ILS) | |
| TACAN | r, $\mu$ coordonnées polaires donnant la position de l'aéronef par rapport à des balises |

Les paramètres capteurs sont transmis au dispositif de calcul 11 (liaison 27) qui calcule des paramètres de navigation sous la forme de données numériques relatives à l'état instantané de l'aéronef et dont la liste est donnée par le tableau 3.

Tableau 2

| INFORMATIONS EN PLANCHE DE BORD | INSTRUMENTS EN PLANCHE DE BORD |
|---|---|
| $\alpha$      incidence | voyant d'incidence |
| HRS      hauteur radio-sonde | indicateur radio-altimétrique |
| r, $\mu$ | indicateur TACAN |
| $C_v$      cap vrai | indicateur de navigation |
| r, $\mu$      position dérive due au vent | (IDN) |
| $\Phi, \Theta$      attitudes | indicateur sphérique |
| $C_v$      cap vrai | (boule) |
| $Z_h$      altitude barométrique | répétiteur d'altitude |
| $V_p$      vitesse aérodynamique | anémomachmètre |
| M      nombre de Mach | |
| $\underline{dH}$      tendance dans le plan | variomètre |
| dt     vertical différents paramètres de navigation dont W route | poste de commande et navigation (PCN) |
| IIVII      vitesse sol | |
| $V_{vent}$      vitesse vent | |

## Tableau 3

### PARAMETRES DE NAVIGATION

| | |
|---|---|
| $V_{p(air)}$ | vitesse air |
| $V_{(sol)}$ | vitesse sol |
| $\Phi, \Theta, \beta$ | attitudes de l'avion |
| $\Omega$ | vecteur vitesse instantanée de rotation |
| $\dfrac{dH}{dt}$ | tendance dans le plan vertical |
| $\sigma$ | accélération |
| $H$ | altitude $\quad$ Z altitude barométrique / H hauteur/sol |
| $M$ | nombre de MACH |
| $g_o$ | pente |
| $L_t, L_g$ | latitude et longitude (position de l'avion) |
| $Z_{BI}$ | altitude baro-inertielle |
| $\alpha$ | angle d'incidence |
| $\Phi_v, \sigma_a, \beta_v$ | attitudes de l'avion par rapport au vecteur vitesse air $V_p$ |

Les paramètres de navigation sont affichés par certains des instruments de bord 14 (liaison 28′) et/ou par un des écrans de visualisation par l'intermédiaire du Boîtier Générateur de Symboles 12 (liaisons 28 et 26). Les éléments contenus dans les rectangles 30 et 31 constituent le système de présentation des informations de pilotage tel qu'il existe actuellement dans les aéronefs modernes, abstraction étant faite des éléments de redondance qui sont habituellement ajoutés pour sécuriser les informations qui sont présentées au pilote.

Le système de sécurisation des informations de pilotage selon l'invention comprend, d'une part, les éléments contenus dans les rectangles 32 et 33 qui effectuent des contrôles de cohérence statiques et, éventuellement d'autre part, ceux contenus dans les rectangles 34 et 35 qui effectuent des contrôles de cohérence dynamiques. Pour certains aéronefs, la sécurisation des informations peut être obtenue à un degré suffisant par les contrôles de cohérence statiques uniquement, auquel cas l'aéronef ne sera équipé que des éléments correspondants 32,33, mais pour d'autres aéronefs, il faudra leur ajouter les éléments (34,35) correspondant aux contrôles de cohérence dynamiques pour obtenir le degré de sécurisation requis.

Les contrôles de cohérence statiques sont réalisés en calculant d'abord les paramètres de navigation théoriques à partir des informations des écrans de visualisation et en les comparant aux paramètres de navigation qui sont fournis soit par les capteurs, soit par le dispositif de calcul, soit encore par les instruments de bord, pour détecter les incohérences et en avertir le pilote.

Les paramètres de navigation sont utilisés pour calculer les paramètres capteurs théoriques qui sont comparés aux paramètres capteurs fournis par les capteurs pour détecter les incohérences éventuelles et en avertir le pilote.

Pour effectuer ces calculs et comparaisons en vue de contrôles de cohérence statiques, le système selon l'invention comprend un premier calculateur 15 pour calculer la fonction inverse $F_1^{-1}$ de la fonction effectuée par le boîtier générateur de symboles 12 à partir des données et/ou signaux qui sont appliqués aux écrans de visualisation 13 (liaison 29) ou qui sont lus sur ces écrans (liaisons 30' et 31' ainsi qu'un dispositif 19).

Le résultat du calcul de la fonction inverse $F_1^{-1}$ pour chaque paramètre de navigation ou paramètre capteur est comparé dans un premier comparateur 16 avec le même paramètre fourni par le dispositif de calcul 11 (liaison 32), et/ou l'instrument de bord 14 correspondant (liaison 32') ou le capteur correspondant (liaison 32"). Lorsque les résultats des comparaisons effectuées dans le premier comparateur 16 indiquent qu'il n'y a pas égalité, avec une précision donnée, entre les valeurs comparées d'un même couple de paramètres, un signal d'incohérence est transmis (liaison 36) à un dispositif d'alarme 20 et, à un dispositif de calcul 17 (liaison 36').

Les paramètres de navigation fournis par le dispositif de calcul 11 (liaison 32) sont appliqués à un deuxième calculateur 17 pour calculer la fonction inverse $F_2^{-1}$ de la fonction réalisée par ledit dispositif de calcul 11 de manière à obtenir les paramètres capteurs. Ces paramètres capteurs ainsi calculés sont comparés dans un deuxième comparateur 18 aux paramètres fournis par les capteurs 10 (liaison 35).

Lorsqu'un signal d'incohérence est fourni par le comparateur 16 au deuxième calculateur 17 (liaison 36'), le calcul de la fonction inverse $F_2^{-1}$ pour le paramètre concerné est inhibé.

Lorsque les résultats des comparaisons effectuées dans le deuxième comparateur 18 indiquent qu'il n'y a pas égalité, avec une précision donnée, entre les valeurs comparées d'un même couple de paramètres, un signal d'incohérence est transmis (liaison 37) au dispositif d'alarme 20.

L'alarme peut être de type sonore, visuel ou autre et indique l'identité du ou des réticules ou caractères alphanumériques erronés présentés dans le viseur en utilisant, par exemple, un écran prévu à cet effet ou un des écrans de visualisation 13.

Si les données à partir desquelles la fonction inverse $F_1^{-1}$ est calculée sont celles fournies par le boîtier générateur de symboles 12, on comprend que le système selon l'invention ne contrôlerait pas le bon fonctionnement des écrans de visualisation 13. Aussi, selon l'invention, le dispositif 19 est prévu pour réaliser la fonction inverse $V^{-1}$ de l'écran de visualisation, c'est-à-dire déterminer à partir des symboles lus sur l'écran les valeurs des paramètres affichés.

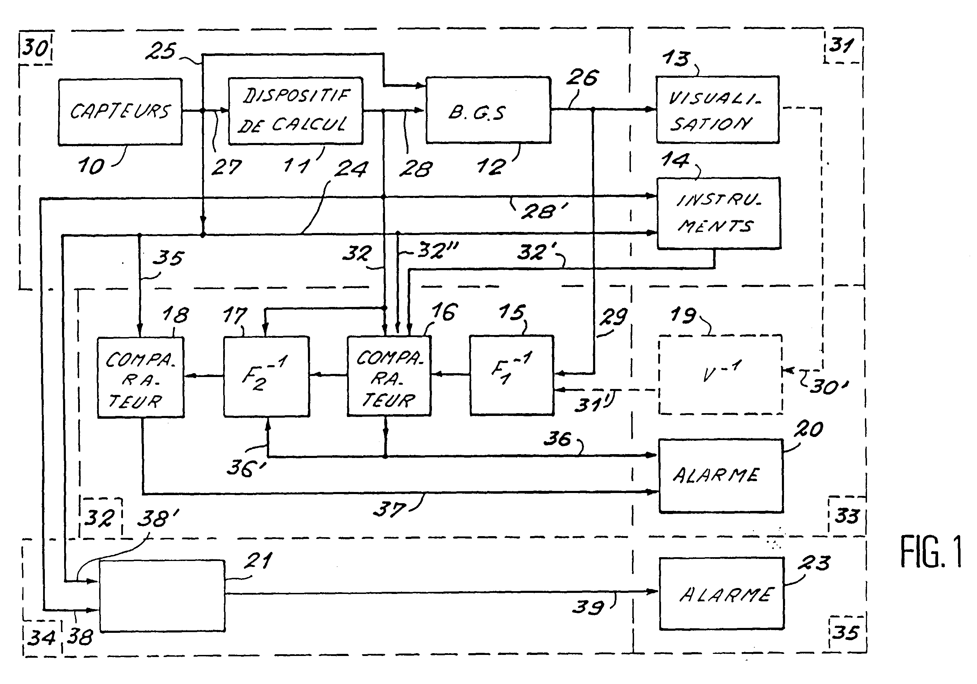

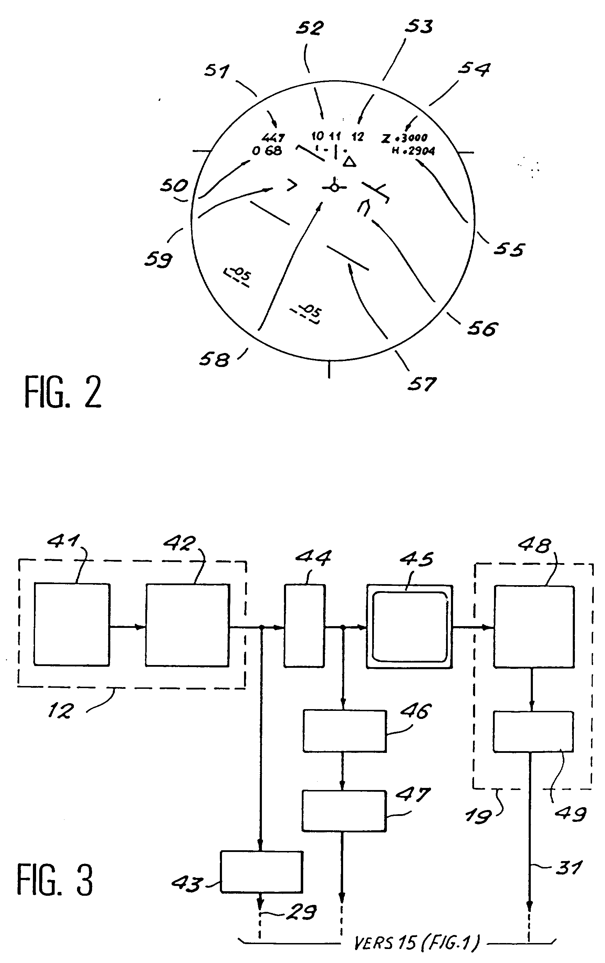

On peut aussi mettre en oeuvre une solution intermédiaire (non réprésentée sur la figure 1) en numérisant les signaux analogiques de déviation et d'allumage de l'écran de visualisation. Le schéma de la figure 3 montre les trois solutions qui peuvent être mises en oeuvre pour obtenir les données qui serviront au calcul de la fonction inverse $F_1^{-1}$.

Le boîtier générateur de symboles 12 comprend un générateur de symboles 42 qui contient la définition graphique des caractères alphanumériques et des réticules et qui fournit les signaux permettant de les faire apparaître à l'écran. Le générateur 42 est sous le contrôle d'un calculateur 41 qui, à partir des paramètres de navigation, élabore les informations à afficher sur l'écran.

A titre d'illustration, la figure 2 donne un exemple d'une configuration de navigation dans laquelle apparaissent les informations suivantes :
les réticules :

- le repère de route 53,
- l'erreur de route 56,
- l'horizon 57,
- le vecteur vitesse 58,
- le taux d'accélération 59;

les caractéristiques alphanumériques :

- le nombre de Mach 50,
- la vitesse en noeuds 51,
- l'échelle de cap 52,
- l'altitude barométrique 54,
- la hauteur radio-sonde 55,

Selon le type d'écran de visualisation, du type à adressage matriciel ou du type à tube cathodique, le générateur de symboles 42 fournit soit des codes numériques, soit des signaux analogiques de déviation du faisceau d'électrons du tube. Les codes numériques sont directement utilisables par le premier calculateur 15, par contre les signaux analogiques doivent être convertis en signaux numériques dans un convertisseur 43.

Les informations de réticules et de caractères alphanumériques sont affichées sur un écran 45 par l'intermédiaire d'un circuit d'adressage 44. Dans le cas d'un tube cathodique où il est souhaité de vérifier la chaîne de transmission jusqu'à l'entrée du tube, il est nécessaire de numériser les signaux de déviation par l'intermédiaire d'un convertisseur analogique/numérique 46 avant de les mémoriser dans une mémoire numérique 47 dite mémoire d'image. Ce sont les codes contenus dans cette mémoire qui sont utilisés dans le dispositif de calcul 15 de la fonction inverse $F_1^{-1}$.

S'il est souhaité de vérifier toute la chaîne de transmission, y compris l'écran 45, il est nécessaire de filmer l'écran à l'aide d'une caméra 48 et de traiter les images obtenues dans un dispositif 49 de traitement d'images pour déterminer les valeurs des caractères numériques et identifier la géométrie des réticules en mettant en oeuvre des algorithmes de reconnaissance des formes. Ce mode de traitement des images est décrit, par exemple, dans la collection Techniques de l'Ingénieur, volume H2, "Informatique-Langages-Systèmes" et, plus précisément, dans l'article H1900 de Jean-Paul HATTON intitulé: "Intelligence Artificielle et Reconnaissance des formes" et dans l'article H1920 de Claudie FAURE intitulé: "Intelligence Artificielle, Reconnaissance des Formes".

A partir des valeurs reconnues et identifiées des réticules et caractères numériques apparaissant sur l'écran, le dispositif de calcul 15 calcule les paramètres de navigation auxquelles elles correspondent tandis que le dispositif de calcul 17 calcule les paramètres capteurs. Le tableau 4 résume les correspondances entre les réticules et les paramètres de navigation et capteurs.

## Tableau 4

| RETICULES | PARAMETRES DE NAVIGATION | | PARAMETRES CAPTEUR |
|---|---|---|---|
| HORIZON | $\Phi, \Theta$ | attitudes en axes avion | |
| | $V_{sol}$ | vecteur vitesse sol | |
| | W | route | |
| | $V_{air}$ | vecteur vitesse air | |
| | $V_p = \|V_{air}\|$ | | |
| | $V_{vent} = V_{sol} - V_{air}$ | | |
| HAUTEUR | HRS | hauteur radio sonde | |
| | $\epsilon_l, \epsilon_g$ | écarts loc et glide | |
| | $\Phi, \Theta$ | attitudes | |
| REPERE DE CAP | $\beta$ | azimut | |
| | $C_v$ | cap vrai (avec $\beta_{vo}$) | |
| | $V_{sol}$ | | |
| | $V_{air}$ | | |
| | W | route | |
| INCIDENCE | $V_{air}$ | | |
| | $V_{sol}$ | pour $Z_h$ <6.000 m et $Z_h$ >4.500 m | |
| | $\alpha$ | incidence (avec RHF) | |
| VECTEUR VITESSE | $V_{sol}$ | vecteur vitesse sol | |
| | $V_{air}$ | vecteur vitesse air | |
| | W | route | |
| ALTITUDE BAROMETRIQUE | M | nombre de Mach | $P_S$ pression statique |
| | $Z_{baro}$ | | |
| | $Z_{baro}$ recalée) avec | | |
| | $dZ/dt$ ) QNH | | |

**Tableau 4 (suite)**

| RETICULES | PARAMETRES DE NAVIGATION | | PARAMETRES CAPTEUR |
|---|---|---|---|
| NOMBRE DE MACH | M | nombre de Mach | $P_S$ et $\delta P$ pressions statique et dynamique |
| VITESSE CONVENTION-NELLE | $V_c$ | vitesse conventionnelle | $P_S$ et $\delta P$ $T_S$ température statique (avec M) |
| ACCELERATION SUR TRAJECTOIRE | $T_a$ dV/dt | taux d'accélération sur trajectoire dérivée de la vitesse | |
| PISTE SYNTHETIQUE | $C_v$ $\Phi$, $\Theta$, $\beta$ $\Phi_v$, $\sigma_a$, $\beta_v$ | cap vrai attitudes avion attitudes aéro-dynamiques (avec $\alpha$) | $\epsilon_l$, $\epsilon_g$ écarts loc et glide |

Les paramètres de navigation et les paramètres capteurs peuvent être obtenus à partir d'un ou plusieurs réticules, ce qui permet d'augmenter le nombre de vérifications pour un même paramètre et, par là-même, d'augmenter le niveau de sécurisation des informations et réticules présentés.

Le tableau 5 indique, par paramètre de navigation les réticules ou les groupes de réticules qui doivent ou peuvent être utilisés dans son calcul par la fonction inverse $F_1^{-1}$.

De manière similaire, le tableau 6 indique, par paramètre capteur les paramètres de navigation ou les groupes de paramètres de navigation qui doivent ou peuvent être utilisés dans son calcul par la fonction inverse $F_2^{-1}$.

Les équations de calcul des fonctions $F_1^{-1}$ et $F_2^{-1}$ seront décrites plus en détail ci-après.

Comme déjà indiqué ci-dessus, les résultats des calculs de la fonction inverse $F_1^{-1}$ sont comparés dans un comparateur 16 aux paramètres de navigation fournis par le dispositif de calcul 11, l'instrument de bord 14 correspondant ou le capteur correspondant de manière à détecter les incohérences.

## Tableau 5

| PARAMETRE DE NAVIGATION | CALCUL PERMETTANT DE L'OBTENIR (nombre) | RETICULES UTILISES | PARAMETRES BGS COMPLEMENTAIRES NECESSAIRES |
|---|---|---|---|
| $\Phi$, $\Theta$, $\beta$ | $a_1$ | horizon repère ce cap | $\beta_{vo}$ |
| attitudes avion | $a_2$ | piste synthétique HRS = H | $\beta_{vo}$ paramètres de la piste |
| $\Phi_v$, $\sigma_a$, $\beta_v$ attitudes aérodynamiques | $b_1$ | incidence | $\Phi$, $\Theta$, $\beta$ |
| M mach | $c_1$ | nombre de mach | |
| | $c_2$ | vitesse conventionnelle $V_c$ altitude barométrique $Z_h$ | QNH |
| | $c_3$ | | $V_{vent}$, $V_{sol}$, $T_S$ |
| $Z_h$ altitude baro recalée | $d_1$ | altitude barométrique | |
| $V_p$ vecteur vitesse air | $e_1$ | | $V_{vent}$, $V_{sol}$ |
| | $e_2$ | horizon incidence cap | $V_{vent}$, $V_{sol}$, d'où $V_p$ $\beta_{vo}$ |
| ($Z_h$>6.000m) | $e_3$ | vitesse altitude incidence horizon cap | $V_{vent}$, $V_{sol}$ d'où $V_{px}$ orientation du viseur dans l'avion $\beta_{vo}$ |
| $V_{sol}$ vecteur vitesse sol | $f_1$ | | $V_{sol}$ |
| ($Z_h$<4.500m) | $f_2$ | vecteur vitesse, horizon cap altitude | $V_x$ de $V_{sol}$ $\beta_{vo}$ orientation du viseur dans l'avion |

## Tableau 5 (suite)

| PARAMETRE DE NAVIGATION | CALCUL PERMETTANT DE L'OBTENIR (nombre) | RETICULES UTILISES | PARAMETRES BGS COMPLEMENTAIRES NECESSAIRES |
|---|---|---|---|
| $V_{sol}$ vecteur vitesse sol (4.500 m$<Z_h$ <6.000 m) | $f_3$ | vecteur vitesse horizon cap incidence route altitude | $V_{sol}$, $V_{vent}$ d'où $V_p$ $\beta_{vo}$ orientation du viseur dans l'avion |
| ($Z_h$>6.000 m) | $f_4$ | route pente altitude | $V_x$, de $V_{sol}$ |
| ($Z_h$>6.000m) | $f_5$ | pente altitude | $V_x$, $V_y$ de $V_{sol}$ |
| ($Z_h$>6.000m) | $f_6$ | vecteur vitesse altitude horizon incidence cap | $V_p$ $V_x$, $V_y$ de $V_{sol}$ $\beta_{vo}$ orientation du viseur dans l'avion |
| W route | $g_1$ | route | |
| | $g_2$ | vecteur vitesse horizon cap | orientation du viseur dans l'avion $\beta_{vo}$ |
| $T_a$ | $h_1$ | | $V_{sol}$ |
| taux d'accélération sur trajectoire | $h_2$ | accélération sur trajectoire | |
| $\epsilon_1$, $\epsilon_g$ écarts loc et glide | $i_1$ | piste synthétique HRS | paramètres de la piste |

Tableau 6

| PARAMETRES CAPTEUR | CALCUL PERMETTANT DE L'OBTENIR (nombre) | PARAMETRES BGS NECESSAIRES |
|---|---|---|
| $P_S$, $\delta P$ Pressions | $k_1$ | vitesse conventionnelle $V_c$ nombre de Mach |
| statique, dynamique | $k_2$ | vitesse conventionnelle $V_c$ $V_{vent}$, $V_{sol}$ donnant $V_p$ $T_S$ |
| $T_S$ | $l_1$ | altitude barométrique $Z_h$ QNH |
| | $l_1$ | Mach $V_{sol}$, $V_{vent}$ donnant $V_p$ |

Tableau 7

| INSTRUMENTS DE BORD | |
|---|---|
| BOULE | $\Phi$, $\Theta$, $C_v$ |
| ANEMOMACHMETRE | M, $V_I$ (permet de calculer $V_c$) |
| REPETITEUR D'ALTITUDE | $Z_h$ |
| VARIOMETRE | dZ/dt |
| PCN | W, ‖$V_{sol}$‖, $V_{vent}$ |
| IDN | $C_v$, $V_{vent}$ |
| RADIOALTIMETRE | HRS |

Le tableau 7 résume la correspondance qu'il y a entre les instruments de bord et les paramètres correspondants qu'ils affichent.

Le calcul des fonctions inverses $F_1^{-1}$ et $F_2^{-1}$ pour chaque paramètre considéré est réalisé à l'aide d'équations qui résultent de l'application des lois de mécanique du vol et d'aérodynamisme.

Pour bien comprendre les calculs des fonctions inverses $F_1^{-1}$ et $F_2^{-1}$, les tableaux 8 et 9 résument les 1 2 notations et définitions des paramètres de l'avion.

EP 0 490 745 B1

## Tableau 8

### PARAMETRES FONDAMENTAUX DE L'AVION

$R_O$ $(O, X_O, Y_O, Z_O)$ — repère absolu galiléen

$R'_O$ $(G, X_O, Y_O, Z_O)$ — repère $R_O$ déplacé au centre de gravité de l'avion

$R$ $(G, X, Y, Z)$ — repère lié à l'avion

$R_a$ $(G, X_a, Y_a, Z_a)$ — repère aérodynamique

$(\Phi, \Theta, \beta)$ et $(\Phi_v, \sigma_a, \beta_v)$ — attidudes respectives de l'avion et du trièdre aérodynamique dans le repère $R'_O$

$V_p = (V_{px}, V_{py}, V_{pz})$ — vitesse propre = vitesse aérodynamique de l'avion = vitesse de l'avion par rapport à l'air (dans le repère absolu)

$V = Vsol = (V_x, V_y, V_z)$ — vitesse sol = vitesse de l'avion par rapport au sol (dans le repère absolu)

$V_{vent} = (V_{ventx}, V_{venty}, V_{ventz})$ — vitesse du vent (dans le repère absolu)

$\alpha$ — incidence de l'avion = angle entre le vecteur vitesse air et l'axe avion dans le plan de symétrie avion

$V_C$ — vitesse conventionnelle

$V_I$ — vitesse indiquée

$g_O$ — pente de l'avion = angle entre le vecteur vitesse sol et sa projection dans le plan horizontal

14

## Tableau 8 (suite)

## PARAMETRES FONDAMENTAUX DE L'AVION

$P_S$       pression statique =
pression de l'atmosphère hors de
l'écoulement

$P_T$       pression totale =
pression exercée sur un objet
plongé dans l'écoulement
aérodynamique

$\delta P$       pression dynamique : $P_S - P_T$

$Z_p$       altitude pression

$Z_h$       altitude baro-recalée

$T_S$       température statique =
température de l'atmosphère hors
de l'écoulement

$T_T$       température totale =
température d'un objet plongé dans
l'écoulement

Tableau 9

| PARAMETRES DESTINES A APPARAITRE DANS LE VISEUR | |
|---|---|
| $V' = (V'_x, V'_y, V'_z)$ | vitesse élaborée par le BGS dont la direction sera matérialisée par un réticule du viseur, exprimée dans le repère absolu. |
| $V_v = (V_{vx}, V_{vy}, V_{vz})$ | vitesse élaborée par le BGS dont la direction sera matérialisée par un réticule du viseur, exprimée dans le repère avion. |
| $Y_v, Z_v$ | "coordonnées" du réticule vecteur vitesse dans le viseur . |
| $C_v$ | Cap géographique donné par la centrale inertielle |
| $C_{gm}$ | cap magnétique donné par la vanne de flux |
| $\beta_{vo}$ | angle de l'axe de nord dans le repère absolu |
| $W = Rs$ | route de l'avion (telle que donnée dans le viseur). |
| $T_a$ | accélération sur trajectoire telle que donnée dans le viseur. |
| PPOTREL | pente potentielle de l'avion ou pente totale. |
| $\Phi, \Theta$ | horizon |

Tableau 9 (suite)

| PARAMETRES DESTINES A APPARAITRE DANS LE VISEUR | |
|---|---|
| HRS | hauteur radio-sonde |
| $Z_h$ | altitude barométrique recalée |
| M | nombre de Mach |
| $V_I$ | vitesse indiquée |

## (a) CALCUL DES ATTITUDES AVION $\Phi$, $\Theta$, $\beta$

Comme l'indiquent les tableaux 4 et 5, les attitudes $\Phi$, $\Theta$ et $\beta$ de l'avion peuvent être obtenues à partir :

- soit des réticules HORIZON et REPERE CAP(calcul $a_1$),
- soit des réticules PISTE SYNTHETIQUE et HRS en cas d'atterrissage ou d'approche (calcul $a_2$).

Les attitudes de l'avion par rapport aux axes de l'avion sont définies par les angles suivants :

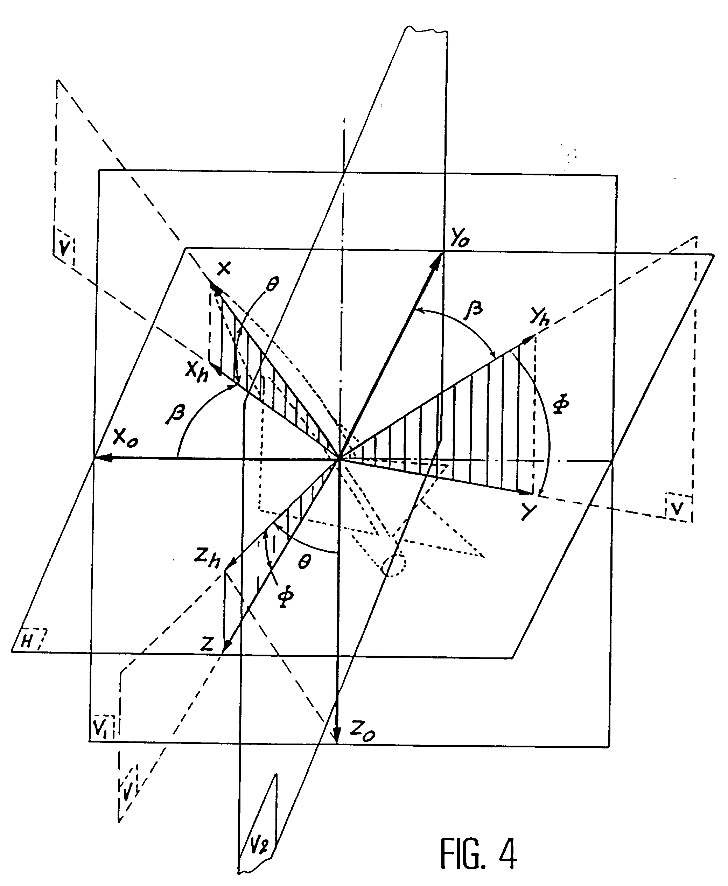

- $\Phi$ pour le gîte (roulis)
- $\Theta$ pour l'assiette longitudinale (tangage)
- $\beta$ pour l'azimut, ainsi que les montre le schéma de la figure 4.

Dans ce schéma de la figure 4,

- $\beta$ est l'angle que fait l'axe $X_o$ avec la projection de l'axe X dans le plan horizontal passant par $X_o$; dans la rotation d'axe $X_o$ et d'angle $\beta$, Y se transforme en $Y_h$;
- $\Theta$ est l'angle que fait l'axe X avec la projection $X_h$ de l'axe X dans le plan horizontal passant par $X_o$; dans la rotation d'axe $Y_h$ et d'angle $\Theta$, $Z_o$ se transforme en $Z_h$;
- $\Phi$ est l'angle que fait Z avec $Z_h$ et Y avec $Y_h$.

- Calcul a1 :

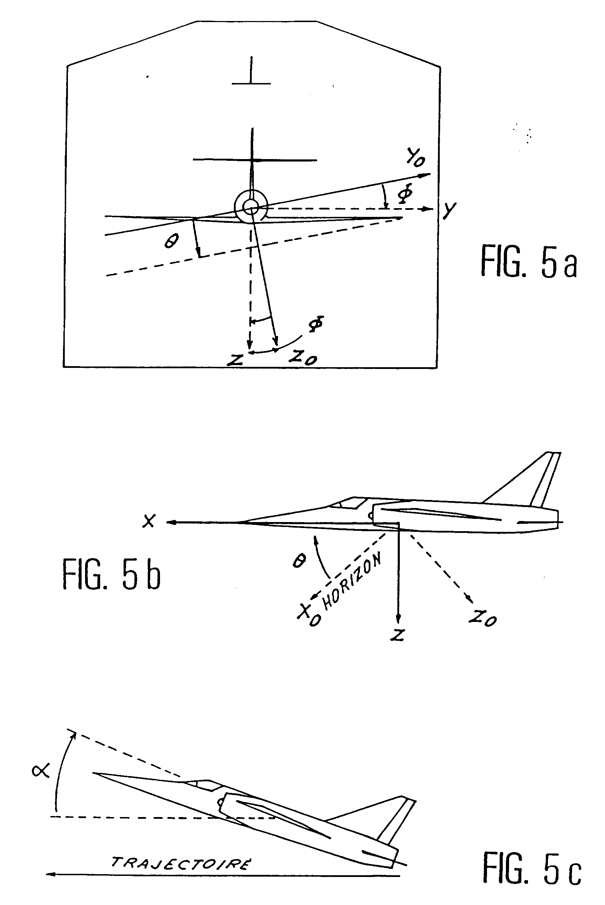

Les angles $\Phi$ et $\Theta$ sont donnés directement par le réticule HORIZON (figures 5-a et 5-b) et n'ont donc pas à être calculés. L'angle $\beta$ est obtenu à partir du REPERE DE CAP par soustraction de l'angle $\beta_{vo}$ entre le nord et l'axe $X_o$ du repère absolu choisi.

- Calcul a2 :

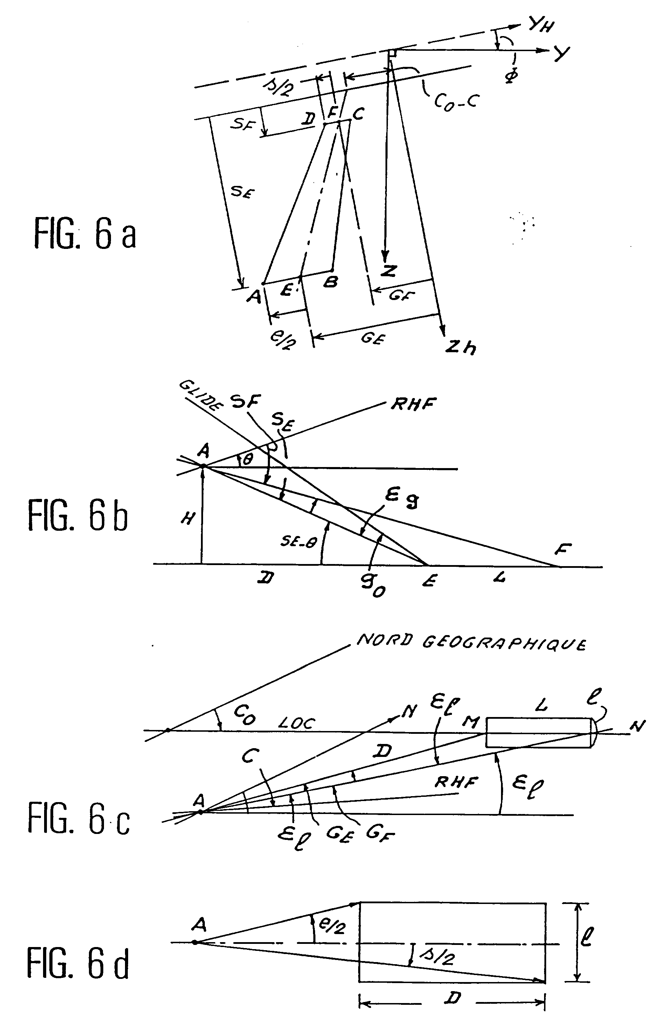

A partir du réticule PISTE SYNTHETIQUE (figure 6-a) en phase d'approche, de la valeur de HRS, des paramètres de la piste de $\beta_{vo}$ on peut aussi calculer $\beta$ et $\Theta$ par les formules suivantes :

$$\beta = \beta_v + C_o - GF + \varepsilon_l$$

$$\Theta = SE - g_o + \varepsilon_g$$

Dans ces formules,

- GF et SE sont donnés par le réticule PISTE SYNTHETIQUE (figure 6-a),
- $\varepsilon_l$ est l'angle entre l'axe de la piste et la direction avion-piste,
- $g_o$ est la pente commandée en entrée de piste,
- $C_o$ est l'angle entre le nord géographique et l'axe de la piste.
- ces deux paramètres $g_o$ et $C_o$ sont des paramètres caractéristiques de la piste.
- $\varepsilon_g$ est l'angle entre la pente commandée $g_o$ en entrée de piste et la pente réelle de l'avion,
- ces deux paramètres $\varepsilon_l$ et $\varepsilon_g$ sont calculés à partir de dimensions géométriques déterminées sur le réticule PISTE SYNTHETIQUE, de la hauteur radio-sonde HRS et de paramètres caractéristiques de la piste.

Les figures 6-b, 6-c et 6-d montrent les différents angles et longueurs dont il est tenu compte pour aboutir au réticule PISTE SYNTHETIQUE, la figure 6-b montrant les angles de descente I.L.S. et réels de l'avion dans un plan vertical et la figure 6-c montrant les angles de direction I.L.S. et réelles de l'avion dans un plan horizontal.

Des figures 6-a, 6-b et 6-c, on peut tirer :

$$\varepsilon_g = \frac{e\, H_{go}}{l}$$

et

$$\varepsilon_1 = \frac{H\,(GE\text{-}GF)}{L\,(g_o + \varepsilon_g)}$$

- e, GE et GF sont déterminés à partir de la géométrie du réticule PISTE SYNTHETIQUE (figure 6-a)
- H = HRS est la hauteur radio-sonde,
- L et l sont respectivement la largeur et la longueur de la piste, c'est-à-dire des paramètres caractéristiques de la piste.

**(b) CALCUL DES ATTITUDES AERODYNAMIQUES** $\Phi_v$, $\sigma_a$ et $\beta_v$

Les attitudes $\Phi_v$, $\sigma_a$ et $\beta_v$ du référentiel aérodynamique par rapport au référentiel absolu sont calculées (un seul calcul b1) à partir du réticule INCIDENCE donnant l'angle $\alpha$ et des paramètres $\Phi$, $\Theta$ et $\beta$ à l'aide des équations suivantes :

$$\tan \Phi_v = \frac{\cos\Theta\sin\Phi}{\sin\Theta\sin\alpha + \cos\Phi\cos\Theta\cos\alpha}$$

$$\sin \sigma_a = \sin\Theta\cos\alpha - \cos\Phi\cos\Theta\sin\alpha$$

$$\tan \beta_v = \frac{\cos\Theta\sin\beta\cos\alpha + (\sin\beta\sin\Theta\cos\Phi - \cos\beta\sin\Phi)\sin\alpha}{\cos\Theta\cos\beta\cos\alpha + (\cos\beta\sin\Theta\cos\Phi + \sin\beta\sin\Phi)\sin\alpha}$$

**(c) CALCUL DU NOMBRE DE MACH M**

Conformément au tableau 5, trois voies de calcul c1, c2 et c3 peuvent être utilisées pour obtenir le nombre M de Mach. La première c1 est d'utiliser directement la lecture sur le réticule correspondant. La deuxième c2 est d'utiliser le réticule VITESSE CONVENTIONNELLE $V_c$ et le réticule ALTITUDE BAROMETRIQUE $Z_h$ ainsi que l'information QNH. Enfin, la troisième voie c3 est d'utiliser les paramètres $V_{vent}$, $V_{sol}$ et $T_s$

- Calcul c1 :

Lecture directe du réticule correspondant

- Calcul c2 :

Utilisation des réticules VITESSE CONVENTIONNELLE et ALTITUDE BAROMETRIQUE et de l'information QNH
Les relations suivantes :

- en vol subsonique :

$$\frac{\delta P}{P_S} = \left[1 + 0{,}2M^2\right]^{3,5} - 1$$

- en vol supersonique :

$$\frac{\delta P}{P_S} = \frac{\left[\frac{(\tau+1)}{2}\,M^2\right)\right]^{\frac{\tau}{\tau-1}}}{\left[1 + 2\tau/(\tau+1)\,(M^2-1)\right]^{\frac{1}{\tau-1}}} - 1$$

permettent de déterminer le nombre de Mach si l'on connaît les pressions $\delta_P$ et $P_S$.

$\delta_P$ se déduit de la vitesse conventionnelle $V_c$ par les relations :

- en vol subsonique

$$\frac{\delta P}{P_O} = \left[1 + 0,2 \frac{(V_C)^2}{(a_O)^2}\right]^{3,5} - 1$$

- en vol supersonique

$$\frac{\delta P}{P_O} = \frac{\left[\frac{\tau+1}{2} \frac{(V_C)^2}{(a_O)^2}\right]^{\frac{\tau}{\tau-1}}}{\left[1 + \frac{2\tau}{\tau+1}\left[\frac{(V_C)^2}{(a_O)^2} - 1\right]\right]^{\frac{1}{\tau-1}}} - 1$$

dans lesquelles :

$P_o = $ 1.013,15 millibars (pression ramenée au niveau de la mer)
$a_o = $ 661 noeuds (vitesse du son au niveau de la mer)
$\tau = $ 1,40 est le rapport $C_p/C_v$ pour un nombre de Mach inférieur à 2

$P_S$ se déduit de l'altitude barométrique recalée par le QNH ($Z_p = Z_h + QNH$) par la relation :

$$P_S = P_{SO}\left[\frac{(288-6,5Z_p)}{288}\right]^{5,25}$$

dans laquelle $P_{so} = 1.013,15$ millibars.

- Calcul c3 :

Utilisation des paramètres $V_{vent}$, $V_{sol}$ et $T_S$ $V_{vent}$ et $V_{sol}$ permettent de calculer $V_p$ par $V_p = \|V_{vent} - V_{sol}\|$ et M est alors donné par la relation :

$$M = \frac{V_p}{k(T_S)^{1/2}}$$

avec K = 40,1 m/s

**(d) CALCUL DE L'ALTITUDE BAROMETRIQUE RECALEE $Z_h$**

Le paramètre $Z_h$ est obtenu directement par recopie du réticule ALTITUDE (un seul calcul d1).

**(e) CALCUL DU VECTEUR VITESSE AERODYNAMIQUE Vp**

Il peut être obtenu de trois manières différentes :

e1 : à partir des paramètres $V_{vent}$ et $V_{sol}$,

e2 :     à partir des réticules HORIZON ($\Phi$,$\Theta$) INCIDENCE $\alpha$ et REPERE DE CAP ($C_v$) et des paramètres $V_p$ et $\beta_{vo}$

e3 :     à partir des réticules VITESSE ($Y_v$ et $Z_v$), ALTITUDE ($Z_h$), INCIDENCE ($\alpha$), HORIZON et CAP pour $Z_h > 6000$ mètres, des paramètres $V_{px}$, $\beta_{vo}$ et de l'orientation du viseur dans l'avion.

Calcul e1 :

Le vecteur vitesse aérodynamique $V_p$ peut être obtenu par la combinaison vectorielle du vecteur $V_{vent}$ et du vecteur $V_{sol}$ selon l'équation :

$$V_p = V_{sol} - V_{vent},$$

Calcul e2 :

Le vecteur vitesse aérodynamique $V_p$ dans le repère $R_o$ peut aussi être obtenu à partir de la norme de la vitesse aérodynamique $V_p$ par la transformation matricielle suivante :

$$(V_p)_{R_O} = \begin{bmatrix} \cos \sigma_a \cos \beta_v \\ \cos \sigma_a \sin \beta_v \\ - \sin \sigma a \end{bmatrix} V_p$$

sachant que les angles $\sigma_a$ et $\beta_v$ peuvent être exprimés en fonction de $\Phi$, $\Theta$, $\beta_{vo}$ des réticules HORIZON et CAP et de $\alpha$ comme indiqué dans le calcul (b) ci-dessus.

Calcul e3 :

Lorsque l'altitude $Z_h$ est supérieure à 6000 mètres, le vecteur vitesse aérodynamique $V_p$ peut être obtenu à partir des réticules :

| - VECTEUR VITESSE | $Y_v$ |
| INCIDENCE | $\alpha$ |
| HORIZON | $\Phi$, $\Theta$ et $\beta$ |
| ALTITUDE | |

et du paramètre $V_{px}$ qui est la composante de $V_p$ suivant l'axe des X dans le repère $R_o$. Ce calcul consiste donc à calculer les autres composantes $V_{py}$ et $V_{pZ}$.

Ainsi, si on prend les notations suivantes :

$(V_{px}, V_{py}, V_{pZ})$ :     coordonnées de $V_p$ dans le repère terrestre $R_o$,

$(V'_{px}, V'_{py}, V'_{PZ})$ :     coordonnées de $V_p$ dans le repère avion,

$(V_{vx}, V_{vy}, V_{vZ})$ :     coordonnées de $V_p$ dans le repère viseur,

On peut écrire :

$$(V_{px}, V_{py}, V_{pZ}) = B (V_{vx}, V_{vx}, V_{vZ})$$

où B est la matrice de passage du repère terrestre au repère viseur, c'est-à-dire la composée de la matrice de passage du repère terrestre au repère avion ($\Phi$,$\Theta$,$\beta$) par la matrice de passage du repère avion au repère viseur, qui résulte de l'orientation du viseur.

On peut écrire :

$$(V_{px}, V_{py}, V_{pZ}) = BV_{vx} (1, V_{vy}/V_{vx}, V_{vZ}/V_{vx})$$

$$= BV_{vx} (1, Y_v, Z_v)$$

Il en résulte que si

- $V_{px}$ est connu par hypothèse,
- $\Phi$, $\Theta$ et $\beta$ sont déterminés à partir des réticules HORIZON et CAP et de $\beta_{vo}$,
- l'orientation du viseur dans l'avion est connue, on peut calculer $V_{vx}$, ce qui permet de calculer $V_{py}$ à l'aide de $Y_v$ et

de la matrice B connus par hypothèse; enfin, connaissant $V_{px}$ et $V_{py}$, la troisième composante $V_{pz}$ est déterminée par la résolution de l'équation suivante où intervient l'incidence $\alpha$ connue par hypothèse :

$$\frac{1}{\tan\alpha} = \frac{V_{py}(\cos\Phi\sin\Theta\sin\beta-\sin\Theta\cos\beta)+V_{pz}\cos\Phi\cos\Theta}{V_{px}\cos\Theta\cos\beta+V_{py}\cos\Theta\sin\beta-V_{pz}\sin\Theta}$$

$$+\frac{V_{px}(\cos\Phi\sin\Theta\sin\beta+\sin\Phi\sin\beta)}{V_{px}\cos\Theta\cos\beta+V_{py}\cos\Theta\sin\beta-V_{pz}\sin\Theta}$$

## (f) CALCUL DU VECTEUR VITESSE $V_{sol}$

Le tableau 5 montre six voies (f1 à f6) de calcul du vecteur vitesse par rapport au sol $V_{sol}$ en tenant compte, notamment, de l'altitude $Z_h$ selon que cette dernière est

- inférieure à 4500 mètres,
- comprise entre 4500 mètres et 6000 mètres,
- supérieure à 6000 mètres.

- <u>Calcul f1</u> :

La première voie consiste à utiliser l'information donnée par le boîtier de générateur de symboles.

- <u>Calcul f2</u> :

La deuxième voie consiste à calculer, dans le cas où $Z_h$ <4.500 mètres, les composantes $V_x$, $V_y$ et $V_z$ du vecteur vitesse $V_{sol}$ dans le repère absolu par l'équation matricielle suivante :

$$\begin{pmatrix} V_x \\ V_y \\ V_z \end{pmatrix} = B \begin{pmatrix} V_{vx} \\ V_{vy} \\ V_{vz} \end{pmatrix}$$

où B est la matrice de passage du repère absolu au repère viseur, c'est-à-dire la composée de la matrice de passage du repère absolu au repère avion donnée par $\Phi$, $\Theta$ et $\beta$, par la matrice de passage du repère avion au repère viseur donnée par l'orientation du viseur dans l'avion.
ce qui donne :

$$\begin{pmatrix} V_x \\ V_y \\ V_z \end{pmatrix} = B V_{vx} \begin{pmatrix} 1 \\ Y_v \\ Z_v \end{pmatrix}$$

où $Y_v = V_{vy}/V_{vx}$ et $Z_v = V_{vz}/V_{vx}$ sont les coordonnées du réticule vitesse.
La connaissance de $V_x$ et de la matrice B, grâce à $\Phi$, $\Theta$ et $\beta$ issus des réticules HORIZON et CAP et du paramètre $\beta_{vo}$ et à l'orientation du viseur dans l'avion, permet alors de calculer $V_{vx}$, puis $V_y$ et $V_z$ grâce à $Y_v$ et $Z_v$.

- <u>Calcul f3</u> :

Les composantes $V_x$, $V_y$ et $V_z$ du vecteur vitesse $V_{sol}$ sont données par :

$$V_x = \frac{qV_1 - q(Z_h)V_p\cos\sigma_a\cos\beta_v}{1 - q(Z_h)}$$

$$V_y = \frac{qV_2 - q(Z_h)V_p\cos\sigma_a\sin\beta_v}{1 - q(Z_h)}$$

$$V_z = V_3 \left[ \frac{V_x^2 + V_y^2}{V_1^2 + V_2^2} \right]^{1/2}$$

où

$$q = \frac{q(Z_h)\, V_p\, (\tan W \cos \sigma_a \cos\beta_v - \cos\sigma_a \sin\beta_v)}{1 - q(Z_h)}$$

formule dans laquelle :

- $q(Z_h)$ est un coefficient qui varie de la valeur zéro pour $Z_h < 4.500$ mètres à la valeur $\underline{1}$ pour $Z_h > 6.000$ mètres selon une courbe linéaire.
- $V_p$ est la vitesse par rapport à l'air, connue par hypothèse
- $\sigma_a$ et $B_v$ se déduisent de $\Phi$, $\Theta$ et $\beta = C + \beta_{vo}$ déterminés à partir des réticules HORIZON et CAP avec le paramètre $\beta_{vo}$ selon le calcul (b) et l'incidence $\alpha$.
- W est la route de l'avion donnée par le réticule ROUTE
- $V_1$, $V_2$, $V_3$ sont les coordonnées du vecteur

$$B \begin{pmatrix} (1) \\ (Y_v) \\ (Z_v) \end{pmatrix}$$

où $Y_v$ et $Z_v$ sont les coordonnées du réticule VITESSE dans le repère viseur et B est la matrice de passage du repère absolu au repère viseur, c'est-à-dire la composée de la matrice de passage du repère absolu au repère avion donnée par $\Phi$, $\Theta$ et $\beta$ et de la matrice de passage du repère avion au repère viseur donnée par l'orientation du viseur dans l'avion.

- Calcul f4 :

Lorsque $Z_h$ est supérieure à 6.000 mètres et que l'on connaît $V_x$, la route W et la pente g, on obtient

$$V_y = \frac{\tan W}{V_x}$$

puis

$$V_z = \sin g_o \left( V_x^2 + V_y^2 + V_z^2 \right)^{1/2}$$

- Calcul f5 :

Lorsque $Z_h$ est supérieure à 6.000 mètres et que l'on connaît $V_x$, $V_y$ et la pente $g_o$, on obtient la troisième composante $V_z$ par la formule ci-dessus.

- Calcul f6 :

Lorsque $Z_h$ est supérieure à 6.000 mètres et que l'on connaît :

- $\Phi$, $\Theta$, $\beta$ de l'avion grâce au réticule HORIZON et à l'orientation du viseur dans l'avion,
- $Y_v$, $Z_v$, les coordonnées du réticule VITESSE,
- $\alpha$, l'incidence,
- $V_p$, la norme de la vitesse par rapport à l'air,

On a vu par le calcul (e3) que l'on pouvait calculer les coordonnées du vecteur vitesse air $V_{px}$, $V_{py}$ et $V_{pz}$ en appliquant la relation :

$$V_z = V_{pz} \left[ \frac{V_x^2 + V_y^2}{V_{px}^2 + V_{py}^2} \right]^{1/2}$$

où $V_x$ et $V_y$ de $V_{sol}$ sont supposées connues.

On en déduit donc les coordonnées $V_x$, $V_y$ et $V_z$ de $V_{sol}$.

## (g) CALCUL DE LA ROUTE W

- Calcul g1 :

Lorsque la route W est donnée par le réticule correspondant, il suffit de recopier cette valeur.

- Calcul g2 :

La route W peut être calculée à partir de $Y_v$ et $Z_v$ donnés par le réticule VITESSE et de (a), (b), (c) qui est la matrice de passage du repère absolu au repère viseur, exprimée dans le repère absolu; elle est le produit de la matrice de passage du repère absolu au repère avion, donnée par $(\Phi)$, $(\Theta)$ et $(\beta)$ issus des réticules HORIZON et CAP et de $\beta_{vo}$, par la matrice de passage du repère avion au repère viseur donnée par l'orientation du viseur dans l'avion.

La route W est alors exprimée par tan W qui est égale à :

$$\tan W = \frac{O+P+Q}{R+S+T}$$

avec

O = cosbsinc
P = $Y_v$(sincsinbsina+cosccosa)
Q = $Z_v$(cosasinbsinc-sinacosc)
R = cosbcosc
S = $Y_v$(coscsinbsina-sinccosa)
T = $Z_v$(cosasinbcosc+sinasinc)

## (h) CALCUL DE L'ACCELERATION $T_a$

- Calcul h1 :

Lorsque le vecteur vitesse au sol $V_{sol}$ est connu, $T_a$ est obtenue en calculant la dérivée $\frac{1}{g}dV/dt$, soit :

$$\frac{1}{g} \frac{d}{dt} \left[ V_x^2 + V_y^2 + V_z^2 \right]^{1/2} = \frac{1}{gV} \left[ V_x \frac{dV_x}{dt} + V_y \frac{dV_y}{dt} + V_z \frac{dV_z}{dt} \right]$$

- Calcul h2 :

Lorsque le réticule ACCELERATION SUR TRAJECTOIRE est disponible, il suffit de lire la valeur qu'il indique.

## (i) CALCUL DES ERREURS DE DESCENTE $\varepsilon_l$ ET $\varepsilon_g$

Le calcul i1 est effectué à partir :

- des paramètres caractéristiques de la piste qui sont :

l = largeur de la piste
L = longueur de la piste

$g_o =$ pente commandée en entrée de piste

- et d'informations déterminées à partir de la géométrie du réticule PISTE SYNTHETIQUE (GE, GF)
- et de H = HRS, hauteur radio-sonde en utilisant les formules suivantes :

$$\varepsilon_g = \frac{e\, Hg_o}{l}$$

et

$$\varepsilon_l = \frac{H\,(GE\text{-}GF)}{L\,(g_o + \varepsilon_g)}$$

### (k) CALCUL DES PRESSIONS STATIQUE $P_S$ ET DYNAMIQUE $\delta P$

Ce calcul peut être effectué de deux manières différentes, soit à partir de la vitesse conventionnelle $V_c$ et du nombre de Mach M (calcul k1), soit à partir de la vitesse conventionnelle $V_c$, de la vitesse air $V_p$ et de la température $T_s$ (calcul k2).

- Calcul k1 :

A partir de $V_c$ et M
Pour cela, il faut résoudre le système d'équations suivantes :

- en vol subsonique :

$$\frac{\delta P}{P_O} = \left[ 1 + 0,2\, \frac{(V_C)^2}{(a_O)^2} \right]^{3,5} - 1$$

$$\frac{\delta P}{P_S} = \left[ 1 + 0,2 M^2 \right]^{3,5} - 1$$

- en vol supersonique :

$$\frac{\delta P}{P_O} = \frac{\left[ \dfrac{\tau + 1}{2}\, \dfrac{(V_C)^2}{(a_O)^2} \right]^{\frac{\tau}{\tau-1}}}{\left[ 1 + \dfrac{2\tau}{\tau+1}\left[ \dfrac{(V_C)^2}{(a_O)^2} - 1 \right] \right]^{\frac{1}{\tau-1}}} - 1$$

$$\frac{\delta P}{P_s} = \frac{\left[\dfrac{\tau + 1}{2} M^2\right]^{\frac{\tau}{\tau - 1}}}{\left[1 + 2\tau/(\tau+1)\ (M^2 - 1)\right]^{\frac{1}{\tau - 1}}} - 1$$

Dans ces formules :

- $P_o = 1013,15$ millibars est la pression ramenée au niveau de la mer,
- $a_o$ est la vitesse du son au niveau de la mer, soit 661 noeuds
- $\tau$ est le rapport $C_p/C_v = 1,40$ pour l'air et M<2.

- <u>Calcul k2</u> :

A partir de $V_c$, $V_p$ et $T_s$
comme $V_p = a.M$, avec "a" la vitesse du son, et que $a = k\sqrt{T_s}$ avec k = 40,1 m/s, on peut écrire que

$$M = \frac{V_p}{K\sqrt{T_s}}$$

Par ailleurs, les équations du paragraphe précédent montrent que
$\delta P/P_s = f(M)$ et que $\delta P/P_o = f(v_c/a_o)$, il en résulte que l'on peut calculer $P_s$ et $\delta P$ en connaissant $V_c$, $V_p$ et $T_s$.

**(m) CALCUL DE LA TEMPERATURE $T_s$**

- <u>Calcul m1</u> :

Ce calcul est effectué à partir de l'altitude barométrique $Z_h$ et du QNH par la formule :

$$P_s = P_{so} \left[\frac{(288 - 6,5 Z_p)}{288}\right]^{5,25}$$

avec $P_{so} = 1013,15$ millibars, la pression standard au niveau de la mer et $Z_p = Z_h + QNH$.

- <u>Calcul m2</u> :

Ce calcul est effectué à partir du nombre de Mach M et de la vitesse $V_p$ par la formule :

$$T_s = \left[\frac{V_p}{kM}\right]^2$$

La description détaillée qui vient d'être faite montre qu'un même paramètre peut être calculé à partir de groupes de réticules et de caractères alphanumériques différents sans qu'il intervienne directement dans l'élaboration desdits réticules et caractères alphanumériques. Ceci permet des vérifications d'un même paramètre par des voies multiples, ce qui augmente le degré de sécurisation.

Les vérifications effectuées à partir du calcul des fonctions inverses $F_1^{-1}$ et $F_2^{-1}$ constituent des contrôles de cohérence statiques, c'est-à-dire ne faisant pas intervenir l'évolution de l'aéronef.

Selon l'invention, il est proposé de réaliser des contrôles de cohérence dynamiques en faisant intervenir les équations du mouvement de l'aéronef.

Ces équations du mouvement de l'avion résultent de l'application du principe fondamental de la dynamique, qui s'exprime par les deux relations suivantes dans le référentiel galiléen $R_o$ :

$$\Sigma\, F_{ext} = m\, \Gamma_{Ro} \text{ (équations de forces)}$$

$$\Sigma\, M_{ext/G} = \frac{d}{dt}\left[ (\pi_G)_{Ro}\, \Omega_{Ra/Ro} \right]_{Ro} \text{ (équations de moments)}$$

où

$m$ :      masse de l'aéronef

$\pi_G$ :      matrice d'inertie de l'aéronef, par rapport à son centre de gravité G

$F_{ext}$ :      forces extérieures exercées sur l'aéronef

$M_{ext/G}$ :      moments extérieurs exprimés par rapport à G, exercés sur l'aéronef

$R_o$ :      référentiel galiléen

$R_a$ :      référentiel aérodynamique, déduit de $(R_o)$ par les rotations $(\beta_v)\,(\sigma_a)\,(\Phi_v)$

$\Gamma_{Ro}$ :      accélération de l'aéronef exprimée dans $(R_o)$

$\Omega_{Ra/Ro}$ :      vecteur instantané de rotation du référentiel $(R_a)$ par rapport au référentiel $(R_o)$

Les trois forces sont :

- le poids $m.g.Z_o$,
- la poussée F portée par le vecteur vitesse,
- la force aérodynamique $F_a$ qui se trouve dans le plan de symétrie de l'avion.

Les moments appliqués à l'avion sont :

- le moment de la force de poussée, considéré comme nul car cette force est portée par l'axe du vecteur vitesse et passe donc par le centre de gravité G,
- le moment de la traînée aérodynamique $-R.X_a$, qui est colinéaire au vecteur vitesse air,
- le moment de la force de portance $-Z.Z_a$, qui est perpendiculaire à la vitesse air,
- le moment du poids est nul, car il passe par le centre de gravité G.

La projection de ces deux équations suivant les trois axes du trièdre aérodynamique conduit aux six équations (1) à (6) de la page suivante :

$$(F-R)/m = \dot{V}_p + g\,\sin\sigma_a \tag{1}$$

$$O = V_p\,(-\dot{\sigma}_a\,\sin\Phi_v + \dot{\beta}_v\,\cos\sigma_a\,\cos\Phi_v) - g\,\cos\sigma_a\,\sin\Phi_v \tag{2}$$

$$Z/m = V_p\,(\dot{\sigma}_a\,\cos\Phi_v - \dot{\beta}_v\,\cos\sigma_a\,\sin\Phi_v) + g\,\cos\sigma_a\,\cos\Phi_v \tag{3}$$

$$(\dot{\sigma}_a\cos\Phi_V)\left[-L(\dot{\Phi}_V-\dot{\beta}_V\sin\sigma_a)+N(-\dot{\sigma}_a\sin\Phi_V+\dot{\beta}_V\cos\sigma_a\cos\Phi_V)\right]$$

$$+(\dot{\beta}_V\cos\sigma_a\sin\Phi_V)\left[-L(\dot{\Phi}_V-\dot{\beta}_V\sin\sigma_a)+N(-\dot{\sigma}_a\sin\Phi_V+\dot{\beta}_V\cos\sigma_a\cos\Phi_V)\right]$$

$$-(-\dot{\sigma}_a\sin\Phi_V+\dot{\beta}_V\cos\sigma_a\cos\Phi_V)B(\dot{\sigma}_a\cos\Phi_V+\dot{\beta}_V\cos\sigma_a\sin\Phi_V)$$

$$+K(\ddot{\Phi}_V-\ddot{\beta}_V\sin\sigma_a-\dot{\beta}_V\dot{\sigma}_a\cos\sigma_a)$$

$$-L(-\ddot{\sigma}_a\sin\Phi_V+\ddot{\beta}_V\cos\sigma_a\cos\Phi_V-\dot{\sigma}_a\dot{\Phi}_V\cos\Phi_V)$$

$$-L(-\dot{\beta}_V\dot{\sigma}_a\sin\sigma_a\cos\Phi_V-\dot{\beta}_V\dot{\Phi}_V\cos\sigma_a\sin\Phi_V)$$

$$-2L\dot{\alpha}(\dot{\Phi}_V-\dot{\beta}_V\sin\sigma_a)+\dot{\alpha}(N-K)(-\dot{\sigma}_a\sin\Phi_V+\dot{\beta}_V\cos\sigma_a\cos\Phi_V)=0\qquad(4)$$

$$(-\dot{\sigma}_a\sin\Phi_V)\left[K(\dot{\Phi}_V-\beta_V\sin\sigma_a)-L(-\dot{\sigma}_a\sin\Phi_V+\dot{\beta}_V\cos\sigma_a\cos\Phi_V)\right]$$

$$+(\dot{\beta}_V\cos\sigma_a\cos\Phi_V)\left[K(\dot{\Phi}_V-\beta_V\sin\sigma_a)-L(-\dot{\sigma}_a\sin\Phi_V+\dot{\beta}_V\cos\sigma_a\cos\Phi_V)\right]$$

$$-(\dot{\Phi}_V-\dot{\beta}_V\sin\sigma_a)\left[-L(\dot{\Phi}_V-\dot{\beta}_V\sin\sigma_a)+N(-\dot{\sigma}_a\sin\Phi_V+\dot{\beta}_V\cos\sigma_a\cos\Phi_V)\right]$$

$$+B(\ddot{\sigma}_a\cos\Phi_V+\ddot{\beta}_V\cos\sigma_a\sin\Phi_V-\dot{\sigma}_a\dot{\Phi}_V\sin\Phi_V)$$

$$+B(-\ddot{\beta}_V\dot{\sigma}_a\sin\sigma_a\sin\Phi_V+\dot{\beta}_V\dot{\Phi}_V\cos\sigma_a\cos\Phi_V)$$

$$=f\ (R\sin\alpha + Z\cos\alpha)\qquad\qquad(5)$$

$$(\dot{\Phi}_V-\dot{\beta}\sin\sigma_a)B(\dot{\sigma}_a\cos\Phi_V+\dot{\beta}_V\cos\sigma_a\sin\Phi_V)$$

$$-(\dot{\sigma}_a\cos\Phi_V)\left[K(\dot{\Phi}_V-\dot{\beta}_V\sin\sigma_a)-L(-\dot{\sigma}_a\sin\Phi_V+\dot{\beta}_V\cos\sigma_a\cos\Phi_V)\right]$$

$$+(\dot{\beta}_V\cos\sigma_a\sin\Phi_V)\left[K(\dot{\Phi}_V-\dot{\beta}_V\sin\sigma_a)-L(-\dot{\sigma}_a\sin\Phi_V+\dot{\beta}_V\cos\sigma_a\cos\Phi_V)\right]$$

$$-L(\ddot{\Phi}_V-\ddot{\beta}_V\sin\sigma_a-\dot{\beta}_V\dot{\sigma}_a\cos\sigma_a)$$

$$+N(-\ddot{\sigma}_a\sin\Phi_V+\ddot{\beta}_V\cos\sigma_a\cos\Phi_V-\dot{\sigma}_a\dot{\beta}_V\cos\Phi_V)$$

$$+N(-\dot{\beta}_V\dot{\sigma}_a\sin\sigma_a\cos\Phi_V-\dot{\beta}_V\dot{\Phi}_V\cos\sigma_a\sin\Phi_V)$$

$$+\dot{\alpha}(N-K)(\dot{\Phi}_V-\dot{\beta}_V\sin\sigma_a)-2L\dot{\alpha}(-\dot{\sigma}_a\sin\Phi_V+\dot{\beta}_V\cos\sigma_a\cos\Phi_V)=0\quad(6)$$

Ces équations ont été obtenues en faisant les hypothèses suivantes :

a) il n'y a pas de dérapage, ce qui signifie que la vitesse air se trouve dans le plan de symétrie de l'aéronef.
b) les forces appliquées à l'aéronef sont la poussée et la force aérodynamique en supposant que :

- la poussée est portée par l'axe du vecteur vitesse,
- la force aérodynamique ne possède pas de composante perpendiculaire au plan de symétrie de l'avion et s'applique ponctuellement

c) la masse et la matrice d'inertie de l'avion sont constantes par rapport aux évolutions.

Dans ce système de six équations, il y a trois inconnues qui sont :

- la valeur algébrique F de la poussée car on a supposé que la poussée était portée par le vecteur vitesse,
- les valeurs algébriques R et Z des deux composantes de la force aérodynamique sur le plan de symétrie de l'aéronef car on a supposé qu'elle n'avait pas de composantes hors de ce plan.

On remarque que les équations (2), (4) et (6) ne comportent pas de forces et donnent donc directement trois équations de cohérence.

On remarquera également que les équations (4), (5) et (6) comportent des coefficients A,B,C,E et K,L,N qui sont les coefficients des matrices d'inertie de l'aéronef.

La matrice d'inertie de l'aéronef exprimée dans le repère avion peut s'écrire sous la forme :

$$\begin{matrix} A & 0 & E \\ 0 & B & 0 \\ -E & 0 & C \end{matrix}$$

Compte tenu des hypothèses indiquées ci-dessus .

Dans le repère aérodynamique, elle s'écrit :

$$\begin{matrix} K & 0 & -L \\ 0 & B & 0 \\ L & 0 & N \end{matrix}$$

où

$$K = \frac{A - C}{2} \cos 2\alpha + \frac{A + C}{2} - E \sin 2\alpha$$

$$L = \frac{A - C}{2} \sin 2\alpha + E \cos 2\alpha$$

$$N = \frac{A - C}{2} \cos 2\alpha + \frac{A + C}{2} + E \sin 2\alpha$$

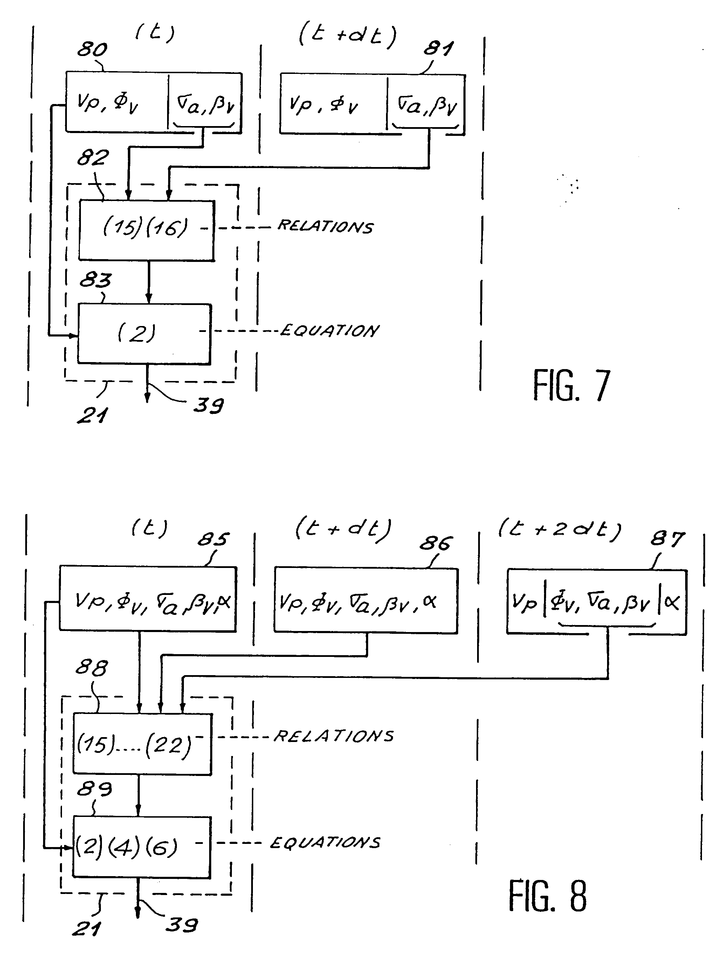

Si la matrice d'inertie de l'aéronef n'est pas connue, seule l'équation de cohérence (2) peut être vérifiée. La figure 7 est un schéma fonctionnel d'un dispositif qui permet de vérifier l'équation (2) à l'instant t. A cet effet, on utilise les valeurs $V_p$, $\Phi_v$, $\sigma_a$, $\beta_v$ aux instants t (rectangle 80) et (t+dt) (rectangle 81) puis on calcule $\dot{\sigma}_a$ et $\dot{\beta}_v$ dans un circuit 82 par les formules :

$$\frac{\sigma_a(t+dt) - \sigma_a(t)}{dt} = \dot{\sigma}_a(t) \tag{15}$$

$$\frac{\beta_v(t+dt) - \beta_v(t)}{dt} = \dot{\beta}_v(t) \tag{16}$$

et on entre les valeurs des dérivées premières ainsi que les valeurs de $V_p$, $\Phi_v$, $\sigma_a$, $\beta_v$ à l'instant t dans la formule (2) (circuit 83) pour vérifier qu'elle est égale à zéro à une précision donnée. Si la valeur obtenue est différente de zéro au-delà d'une certaine valeur, le circuit 83 fournit un signal d'alarme sur le conducteur 39. Les circuits 82 et 83 font partie du calculateur 21 (figure 1).

La figure 8 est un schéma fonctionnel d'un dispositif qui permet de vérifier les équations (2), (4) et (6) à l'instant t. A cet effet, on utilise les valeurs $V_p$, $\Phi_v$, $\sigma_a$, $\beta_v$, $\alpha$ aux instants t (rectangle 85), (t+dt) (rectangle 86) et (t+2dt) (rectangle 87), puis on calcule dans un circuit 88

les dérivées premières $\dot{V}_p$, $\dot{\Phi}_v$, $\dot{\sigma}_a$, $\dot{\beta}_v$, $\dot{\alpha}$ et secondes $\ddot{\Phi}_v$, $\ddot{\sigma}_a$, $\ddot{\beta}_v$ par les formules (15) et (16) ci-dessus pour $\dot{\sigma}_a$ et $\dot{\beta}_v$ et par les formules suivantes (17 à (22) pour les autres dérivées.

$$\frac{V_p(t+dt) - V_p(t)}{dt} = \dot{V}_p(t) \tag{17}$$

$$\frac{\Phi_v(t+dt) - \Phi_v(t)}{dt} = \dot{\Phi}_v(t) \tag{18}$$

$$\frac{\alpha(t+dt) - \alpha(t)}{dt} = \dot{\alpha}(t) \tag{19}$$

$$\frac{\Phi_V(t+2dt) - \Phi_V(t+dt) + \Phi_V(t)}{(dt)^2} = \ddot{\Phi}_V(t) \tag{20}$$

$$\frac{\sigma_a(t+2dt) - 2\sigma_a(t+dt) + \sigma_a(t)}{(dt)^2} = \ddot{\sigma}_a(t) \tag{21}$$

$$\frac{\beta_V(t+2dt) - 2\beta_V(t+dt) + \beta_V(t)}{(dt)^2} = \ddot{\beta}_V(t) \tag{22}$$

Ces valeurs des paramètres et de leurs dérivées premières et secondes sont utilisées dans un circuit 89 pour calculer les équations (2), (4) et (6). Si le résultat des calculs est, pour chaque équation, une valeur qui est différente de zéro au-delà d'un certain seuil, le circuit 89 fournit un signal d'alarme sur le conducteur 39. Les circuits 88 et 89 font partie du calculateur 21 (figure 1).

Les équations de cohérence (2), (4) et (6), qui ne font pas intervenir les forces appliquées sur l'aéronef, permettent de vérifier en temps réel (instant t) que $V_p$, $\beta_v$, $\sigma_a$, $\Phi_v$ et $\alpha$ ainsi que les dérivées premières et secondes de $\beta_v$, $\sigma_a$ et $\Phi_v$ sont cohérentes mais elles ne permettent pas de vérifier leur évolution dans le temps, c'est-à-dire de vérifier que leurs valeurs aux instants t, (t + dt), (t+2dt) et (t+3dt) varient de manière cohérente.

Pour cette vérification des évolutions dans le temps de l'aéronef, l'invention propose d'utiliser les six équations (1), (2), (3), (4), (5) et (6), définies ci-dessus, pour calculer les paramètres :

$\dot{V}_p$, $\dot{\Phi}_v$, $\dot{\sigma}_a$, $\dot{\beta}_v$, $\dot{\alpha}$, $\ddot{\Phi}_V$, $\ddot{\sigma}_a$ et $\ddot{\beta}_V$ à l'instant (t+dt) en fonction des valeurs des forces F, R et Z et des paramètres $V_p$, $\Phi_v$, $\sigma_a$, $\beta_v$ et $\alpha$ à l'instant (t+dt).

Ces paramètres sont donnés par les formules suivantes :

$$\dot{V}_p = \frac{F-R}{m} - g\sin\sigma_a \tag{7}$$

$$\ddot{\Phi}_V = A'_o + B'_o \ddot{\beta}_V + C'_o \ddot{\sigma}_a \tag{8}$$

dans laquelle :

$$A'_o = \frac{-\dot{V}_p\dot{\sigma}_a\sin\Phi_v + \dot{V}_p\dot{\beta}_v\cos\sigma_a\cos\Phi_v - V_p\dot{\beta}_v\dot{\sigma}_a\cos\Phi_v\sin\sigma_a}{V_p\dot{\sigma}_a\cos\Phi_v + V_p\dot{\beta}_v\cos\sigma_a\sin\Phi_v + g\cos\sigma_a\sin\Phi_v}$$
$$+ \frac{\dot{\sigma}_a\, g\sin\sigma_a\sin\Phi_v}{V_p\dot{\sigma}_a\cos\Phi_v + V_p\dot{\beta}_v\cos\sigma_a\sin\Phi_v + g\cos\sigma_a\sin\Phi_v}$$

$$B'_o = \frac{V_p\cos\sigma_a\cos\Phi_v}{V_p\dot{\sigma}_a\cos\Phi_v + V_p\dot{\beta}_v\cos\sigma_a\sin\Phi_v + g\cos\sigma_a\sin\Phi_v}$$

$$C'_o = \frac{-V_p\sin\Phi_v}{V_p\dot{\sigma}_a\cos\Phi_v + V_p\dot{\beta}_v\cos\sigma_a\sin\Phi_v + g\cos\sigma_a\sin\Phi_v}$$

$$\dot{\sigma}_a = \frac{Z}{mV_p}\cos\Phi_v - \frac{g}{V_p}\cos\sigma_a \tag{9}$$

$$\dot{\beta}_v = \frac{Z\,\sin\Phi_v}{mV_p\,\cos\sigma_a} \tag{10}$$

$$\dot{\alpha} = a_\alpha\,\ddot{\beta}_v + b_\alpha\,\ddot{\sigma}_a + c_\alpha \tag{11}$$

dans laquelle :

$$a_\alpha = \frac{k_\alpha\,A}{j\,nV_p^2}$$

$$b_\alpha = \frac{k_\alpha\,B}{j\,nV_p^2}$$

$$c_\alpha = \frac{k_\alpha}{j}\left[\frac{C}{nV_p^2} - \frac{2n\dot{V}_p}{V_p^3}\right]$$

et

$$A = \dot{\beta}_v\,g^2\,V_p^2\cos^2\sigma_a$$

$$B = g^2 V_p^2\,\dot{\sigma}_a + g^3 V_p\cos\sigma_a$$

$$C = g^2\left[-V_p^2\,\dot{\beta}_v^2\,\dot{\sigma}_a\cos\sigma_a + V_p\,\dot{V}_p\,(\dot{\beta}_v^2\cos^2\sigma_a + \dot{\sigma}_a^2)\right]$$
$$+ g^2\left[-V_p\,g\,\dot{\sigma}^2\sin\sigma_a + g\dot{\sigma}_a\dot{V}_p\cos\sigma_a - g^2\,\sigma_a\cos\sigma_a\sin\sigma_a\right]$$

avec l'incidence $\alpha$ qui est une fonction du facteur de charge n perpendiculaire au vecteur vitesse et de la vitesse aérodynamique $V_p$ par la relation :

$$\alpha = C_{pn} + k_\alpha\,n/j\,V_p^2$$

où $k_\alpha$ et $C_{pn}$ sont des coefficients aérodynamiques de l'avion et j la masse volumique de l'air.

Le facteur de charge n donné par l'équation :

$$n = 1/g\left[(V_p\dot{\beta}_v\cos\sigma_a)^2 + (V_p\dot{\sigma}_a + g\cos\sigma_a)^2\right]^{1/2}$$

Par substitutions et dérivations successives, on établit, à partir du système d'équations (1) à (6), les relations suivantes :

$$A_8 + B_8\,\ddot{\beta}_v + C^8\,\ddot{\sigma}_a + D_8\,\ddot{\beta}_v\,\ddot{\sigma}_a + E_8\,\ddot{\beta}_v^2 + F_8\,\ddot{\sigma}_a^2 = 0 \tag{13}$$

$$A_9 + B_9\,\ddot{\beta}_v + C_9\,\ddot{\sigma}_a + D_9\,\ddot{\beta}_v\,\ddot{\sigma}_a + E_9\,\ddot{\beta}_v^2 + F_9\,\ddot{\sigma}_a^2 = 0 \tag{14}$$

Ce système est constitué de deux polynômes en $\ddot{\sigma}_a$ et $\ddot{\beta}_v$ dont les coefficients $A_8$ à $F_8$ et $A_9$ à $F_9$ sont des coefficients explicites de $V_p$, $\Phi_v$, $\sigma_a$, $\beta_v$ et $\dot{\sigma}_a$ et $\dot{\beta}_v$ étant eux-mêmes fonction de $V_p$, $\Phi_v$, $\sigma_a$, $\beta_v$ et $\alpha$. Ces coefficients sont donnés par les relations suivantes :

$$A_8 = F_o + A_o A'_o$$

$$B_8 = A_o B'_o + A'_o B_o + D_o$$

$$C_8 = A_o C'_o + A'_o C_o + E_o$$

$$D_8 = B_o C'_o + B'_o c_o$$

$$E_8 = B_o B'_o$$

$$F_8 = C_o C'_o$$

$$A_9 = A_5 A'^2_o + B_5 A'_o + E_5$$

$$B_9 = C_5 + B_5 B'_o + 2 A_5 A'_o B'_o$$

$$C_9 = D_5 + B_5 C'_o + 2 A_5 A'_o C'_o$$

$$D_9 = 2 A_5 B'_o C'_o$$

$$E_9 = 2 A_5 B'^2_o$$

$$F_9 = 2 A_5 C'^2_o$$

les coefficients $A'_o$, $B'_o$ et $C'_o$ ayant été définis précédemment en relation avec la formule (8).

$$A_o = LA_4 - KA_6$$

$$B_o = LB_4 - KB_6$$

$$C_o = LC_4 - KC_6$$

$$D_o = LD_4 - KD_6$$

$$E_o = LE_4 - KE_6$$

$$F_o = LF_4 - KF_6$$

$$A_4 = 2Lc_\alpha - L\sigma_a \cos\Phi_v$$

$$B_4 = 2La_\alpha$$

$$C_4 = 2Lb_\alpha$$

$$D_4 = -K\sin\sigma_a + L\cos\sigma_a \cos\Phi_v$$

$$+a_\alpha[-2L\dot\beta_v\sin\sigma_a+(N-K)(-\dot\sigma_a\sin\Phi_v+\dot\beta_v\sigma_a\cos\Phi_v)]$$

$$E_4 = -L\sin\Phi_v+b_\alpha[-2L\dot\beta_v\sin\sigma_a+(N-K)(-\dot\sigma_a\sin\Phi_v+\dot\beta_v\cos\sigma_a\cos\Phi_v)]$$

$$F_4 = (\dot\sigma_a\cos\Phi_v)+[L\dot\beta_v\sin\sigma_a+N(-\dot\sigma_a\sin\Phi_v+\dot\beta_v\cos\sigma_a\cos\Phi_v)]$$

$$+(\dot\beta_v\cos\sigma_a\sin\Phi_v)[L\dot\beta_v\sin\sigma_a+N(-\dot\sigma_a\sin\Phi_v+\dot\beta_v\cos\sigma_a\cos\Phi_v)$$

$$-(-\dot\sigma_a\sin\Phi_v+\dot\beta_v\cos\sigma_a\cos\Phi_v)B(\dot\sigma_a\cos\Phi_v+\dot\beta_v\cos\sigma_a\sin\Phi_v)$$

$$-K\dot\beta_v\dot\sigma_a\cos\sigma_a-L(\dot\sigma_a\dot\Phi_v\cos\Phi_v+\dot\beta_v\dot\sigma_a\sin\sigma_a\cos\Phi_v)$$

$$+c_\alpha[-2L\dot\beta_v\sin\sigma_a+(N-K)(-\dot\sigma_a\sin\Phi_v+\dot\beta_v\cos\sigma_a\cos\Phi_v)]$$

$$A_5 = -L$$

$$B_5 = K(-\dot{\sigma}_a \sin\Phi_v + \dot{\beta}_v \cos\sigma_a \cos\Phi_v)$$

$$+N(-\dot{\sigma}_a \sin\Phi_v + \dot{\beta}_v \cos\sigma_a \cos\Phi_v)$$

$$-2L\dot{\beta}_v \sin\sigma_a - B(\dot{\sigma}_a \sin\Phi_v - \dot{\beta}_v \cos\sigma_a \cos\Phi_v)$$

$$C_5 = B\cos\sigma_a \sin\Phi_v$$

$$D_5 = B\cos\Phi_v$$

$$E_5 = (-\dot{\sigma}_a \sin\Phi_v)[-K\dot{\beta}_v \sin\sigma_a - L(-\dot{\sigma}_a \sin\Phi_v + \dot{\beta}_v \cos\sigma_a \cos\Phi_v)]$$

$$+(\dot{\beta}_v \cos\sigma_a \cos\Phi_v)[K\dot{\beta}_v \sin\sigma_a - L(-\dot{\sigma}_a \sin\Phi_v + \dot{\beta}_v \cos\sigma_a \cos\Phi_v)]$$

$$-\dot{\beta}_v \sin\sigma_a [L\dot{\beta}_v \sin\sigma_a + N(-\dot{\sigma}_a \sin\Phi_v + \dot{\beta}_v \cos\sigma_a \cos\Phi_v]$$

$$-B(\dot{\beta}_v \dot{\sigma}_a \sin\sigma_a \sin\Phi_v) - f(R\sin\alpha + Z\cos\alpha)$$

$$A_6 = (B-N-K)(\dot{\sigma}_a \cos\Phi_v + \dot{\beta}_v \cos\sigma_a \sin\Phi_v) + (N-K) c_\alpha$$

$$B_6 = (N-K) a_\alpha$$

$$C_6 = (N-K) b_\alpha$$

$$D_6 = L\sin\sigma_a + N\cos\sigma_a \cos\Phi_v$$

$$+a_\alpha[-(N-K)(\dot{\beta}_v \sin\sigma_a - 2L(-\dot{\sigma}_a \sin\Phi_v + \dot{\beta}_v \cos\sigma_a \cos\Phi_v)]$$

$$E_6 = -N\sin\Phi_v + b\alpha[-(N-K)\dot{\beta}_v \sin\sigma_a - 2L(-\dot{\sigma}_a \sin\Phi_v + \dot{\beta}_v \cos\sigma_a \cos\Phi_v)]$$

$$F_6 = -B\dot{\beta}_v \sin\sigma_a (\dot{\sigma}_a \cos\Phi_v + \dot{\beta}_v \cos\sigma_a \sin\Phi_v)$$

$$+(\dot{\sigma}_a \cos\Phi_v)[K\dot{\beta}_v \sin\sigma_a + L(-\dot{\sigma}_a \sin\Phi_v + \dot{\beta}_v \cos\sigma_a \cos\Phi_v)]$$

$$+\dot{\beta}_v \cos\sigma_a \sin\Phi_v)(K\dot{\beta}_v \sin\sigma_a + L(-\dot{\sigma}_a \sin\Phi_v + \dot{\beta}_v \cos\sigma_a \cos\Phi_v)]$$

$$+L\dot{\beta}_v \dot{\sigma}_a \cos\sigma_a - N(\dot{\sigma}_a \dot{\beta}_v \sin\sigma_a \cos\Phi_v)$$

$$+c_\alpha[-(N-K)\dot{\beta}_v \sin\sigma_a - 2L(-\dot{\sigma}_a \sin\Phi_v + \dot{\beta}_v \cos\sigma_a \cos\Phi_v)]$$

Le système d'équations (13) et (14) peut être résolu par diverses méthodes numériques, en particulier la méthode de Newton.

Après quelques boucles de calcul, on obtient $\ddot{\dot{\beta}}_v$ et $\ddot{\dot{\sigma}}_a$ à la précision souhaitée, ce qui permet le calcul de $\dot{\Phi}_v$ par l'équation (8), de $\alpha$ par l'équation (11) de $\ddot{\dot{\Phi}}_v$ par l'équation (12).

$$\dot{\Phi}_v = -\frac{1}{K}[(D_4 \dot{\beta}_v + E_4 \dot{\sigma}_a + F_4 + \dot{\Phi}_v(A_4 + B_4 \dot{\beta}_v + C_4 \dot{\sigma}_a))] \tag{12}$$

où $A_4$, $B_4$, $C_4$, $D_4$, $E_4$ et $F_4$ sont des coefficients explicites (définis ci-dessus) de $V_p$, $\Phi_v$, $\sigma_a$, $\beta_v$ et leurs dérivés premières, équation issue de l'équation (4) après élimination de $\alpha$.

Les valeurs des paramètres $\dot{V}_p$, $\dot{\Phi}_v$, $\dot{\sigma}_a$, $\dot{\beta}_v$, $\dot{\alpha}$, $\ddot{\dot{\Phi}}_v$, $\ddot{\dot{\sigma}}_a$, $\ddot{\dot{\beta}}_v$ qui ont été calculées à l'aide des formules et équations décrites ci-dessus en utilisant les valeurs des paramètres obtenues par les capteurs à l'instant (t+dt) et des forces calculées à l'instant t par les équations (1), (3) et (5) sont comparées aux valeurs des paramètres correspondants qui sont déterminées à partir des paramètres de navigation aux instants t, (t+dt) et (t+2dt) en mettant en oeuvre les relations (15) à (22).

**EP 0 490 745 B1**

Par analogie, les dérivées première et seconde à l'instant (t+dt) sont calculées à l'aide des valeurs aux instants (t+dt), (t+2dt) et (t+3dt).

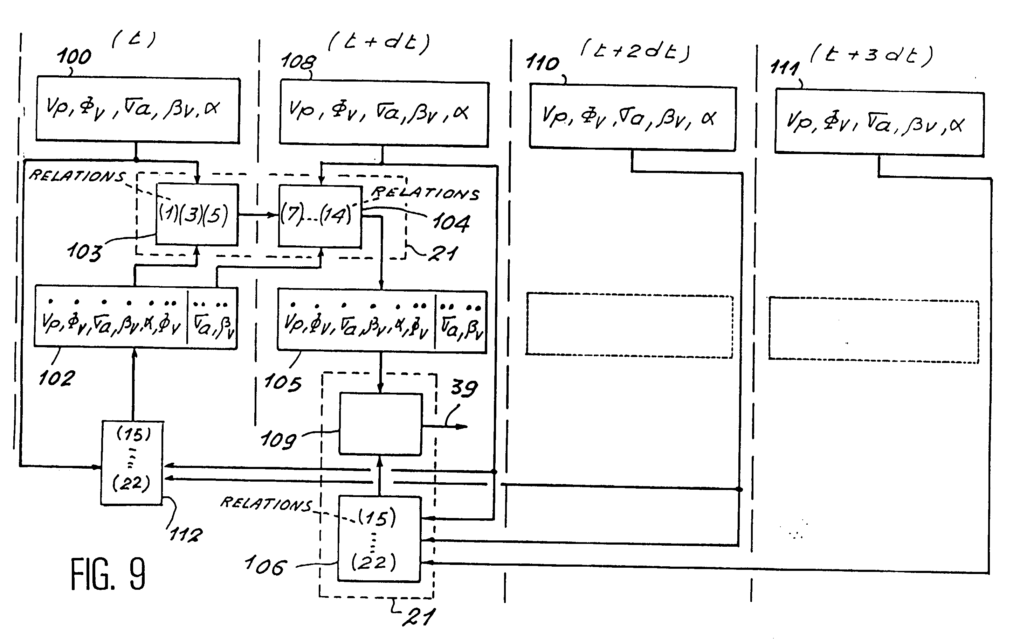

La figure 9 résume de manière très schématique cet aspect de l'invention qui concerne les contrôles dynamiques de cohérence des évolutions de l'aéronef.

A l'instant t, les capteurs fournissent les paramètres $V_p$, $\Phi_v$, $g_a$, $\beta_v$ et $\alpha$ (rectangle 100) qui sont combinés suivant les équations (1), (3) et (5) (rectangle 103) avec les valeurs des dérivées premières et secondes $\dot{V}_p$, $\dot{\Phi}_v$, $\dot{\sigma}_a$, $\dot{\beta}_v$, $\dot{\alpha}$, $\ddot{\Phi}_v$, $\ddot{\sigma}_a$, $\ddot{\beta}_v$ (rectangle 102) calculées à l'instant t à l'aide des équations (15) à (22) (rectangle 112) d'évolution pour calculer les forces F, R et Z qui s'appliquent à l'aéronef à l'instant t.

Si l'on suppose que les forces calculées F, R et Z à l'instant t varient peu pendant l'intervalle de temps dt, on peut les utiliser dans un calculateur 104 pour obtenir les dérivées premières $\dot{V}_p$, $\dot{\Phi}_v$, $\dot{\sigma}_a$, $\dot{\beta}_v$, $\dot{\alpha}$ et secondes $\ddot{\Phi}_v$, $\ddot{\sigma}_a$, $\ddot{\beta}_v$ (rectangle 105) à l'instant (t+dt) en utilisant les équations définies (7) à (14) ci-dessus. A cet effet, il faut également fournir au calculateur 104, les valeurs des paramètres $V_p$, $\Phi_v$, $\sigma_a$, $\beta_v$ et $\alpha$ à l'instant (t+dt) ainsi que les valeurs de départ de $\ddot{\sigma}_a$ et $\ddot{\beta}_v$ à l'instant t (rectangle 102) pour calculer par approximations successives les valeurs de $\ddot{\sigma}_a$ et $\ddot{\beta}_v$, à l'instant (t+dt).

Les valeurs des paramètres et de leurs dérivées qui sont calculées par le calculateur 104 sont comparées dans un comparateur 109 aux valeurs correspondantes qui sont calculées par un calculateur 106 à partir des valeurs des paramètres $V_p$, $\Phi_v$, $\sigma_a$, $\beta_v$ et $\alpha$ aux instants (t+dt) (rectangle 108), (t+2dt)(rectangle 110) et (t+3dt) (rectangle 111).

Lorsque la comparaison des différentes valeurs des paramètres et de leurs dérivées obtenues, d'une part, à partir directement des paramètres de navigation aux instants (t+dt)(t+2dt) et (t+3dt) et, d'autre part, par des calculs à l'aide des équations du mouvement, révèle des différentes excèdant une certaine valeur, le comparateur 109 fournit un signal d'alarme.

Bien entendu, les seuils à partir desquels un signal d'alarme est fourni varient selon le paramètre considéré et selon le niveau de sécurisation que l'on souhaite obtenir.

Les valeurs des paramètres $\dot{V}_p$, $\dot{\Phi}_v$, $\dot{\sigma}_a$, $\dot{\beta}_v$, $\dot{\alpha}$, $\ddot{\Phi}_v$, $\ddot{\sigma}_a$, $\ddot{\beta}_v$, à l'instant (t+dt) (rectangle 105), sont gardées en mémoire pour être utilisées dans le calcul des forces F, R et Z à l'instant suivant (t+dt) en combinaison avec les valeurs des paramètres $V_p$, $\Phi_v$, $\sigma_a$, $\Phi_v$ et $\alpha$ à l'instant (t+dt) (rectangle 108). Ces forces seront assimilées aux forces à l'instant (t+2dt) pour la vérification des paramètres à l'instant (t+2dt).

Dans une variante, on peut utiliser pour le calcul des forces F, R et Z, les valeurs des paramètres $V_p$, $\Phi_v$, $\sigma_a$, $\beta_v$ et $\alpha$ et de leurs dérivées première et seconde qui ont été calculées à l'instant t à l'aide des relations (7) à (14).

Dans une autre variante, on peut utiliser soit les valeurs calculées à l'aide des relations (15) à (22) qui sont plus précises, soit celles calculées à l'aide des relations (7) à (14) en fonction du résultat de la comparaison effectuée par le circuit 109 de manière à ne pas utiliser le paramètre calculé à l'aide des relations (7) à (14) qui est incohérent.

Les opérations décrites ci-dessus sont répétées à chaque instant séparé du précédent par l'intervalle de temps dt.

**Revendications**

1. Procédé de sécurisation des informations de pilotage d'un aéronef, lesdites informations correspondant, d'une part, à des paramètres fournis par des capteurs et, d'autre part, à des paramètres dits de navigation fournis par un dispositif de calcul et étant présentées au pilote, soit par l'intermédiaire d'instruments de bord, soit par l'intermédiaire d'un générateur de symboles associé à un dispositif d'affichage d'images de synthèse qui comportent un ou plusieurs réticules ainsi que des caractères alphanumériques, ledit procédé étant caractérisé en ce qu'il comprend les opérations suivantes :

   (a) détection et reconnaissance des images de synthèse à partir de l'analyse des images elles-mêmes de manière à obtenir des signaux numériques représentatifs des informations de pilotage présentées au pilote,
   (b) calcul d'un ou plusieurs paramètres de navigation et/ou paramètres capteurs à partir desdits signaux numériques,
   (c) comparaison desdits paramètres calculés aux valeurs des mêmes paramètres fournis par ledit dispositif de calcul ou par les capteurs de manière à détecter les incohérences entre les paramètres comparés,
   (d) élaboration d'un signal d'alarme lorsque une ou plusieurs incohérences dépassent un seuil déterminé.

32

**2.** Procédé selon la revendication 1, caractérisé en ce que l'opération (a) consiste à filmer l'écran du dispositif d'affichage ou une copie dudit écran, à retenir une image dudit écran et à l'enregistrer sous forme de signaux numériques dans une mémoire, à analyser cette image de manière à identifier la géométrie et les valeurs du ou des réticules et des caractères alphanumériques et à déterminer les valeurs numériques des informations présentées au pilote sur l'écran du dispositif d'affichage.

**3.** Procédé selon la revendication 1 ou 2, caractérisé en ce que l'opération (c) consiste en outre en une comparaison desdits paramètres calculés aux valeurs des mêmes paramètres fournis par les instruments de bord.

**4.** Procédé selon la revendication 1, 2 ou 3 caractérisé en ce que l'opération (b) consiste à calculer un même paramètre à partir de groupes de réticules et/ou de caractères alphanumériques différents.

**5.** Procédé selon l'une des revendications précédentes 1 à 4, caractérisé en ce que l'opération (c) comprend les opérations suivantes :

(a) calcul à partir des paramètres de navigation $\sigma_a$, représentatif de l'horizon, et $\beta_v$ représentatif d'un angle d'attitude aérodynamique, aux instants t et (t+dt) des dérivées premières $\dot{\sigma}_a$, $\dot{\beta}_v$, à l'instant t,
(b) vérification de la relation (2) en utilisant les valeurs des paramètres $V_p$, représentatif de la vitesse aérodynamique, $\Phi_v$, $\sigma_a$ et $\beta_v$, représentatifs d'angles d'attitudes aérodynamiques à l'instant t et des dérivées premières $\dot{\sigma}_a$ et $\dot{\beta}_v$ à l'instant t calculées par l'opération (a), et caractérisé en ce que l'opération d'élaboration d'un signal d'alarme comprend l'opération de :
(c) générer un signal d'alarme lorsque la relation (2) n'est pas vérifiée à une précision donnée.

**6.** Procédé selon la revendication 5, caractérisé en ce qu'il comprend, en outre, les opérations suivantes :

(d) calcul à partir des paramètres de navigation $\sigma_a$, $\beta_v$, $\Phi_v$ et $\alpha$, représentatif de l'angle d'incidence, aux instants t, (t+dt) et (t+2dt), des dérivées premières $\dot{\sigma}_a$, $\dot{\beta}_v$, $\dot{\Phi}_v$ et $\dot{\alpha}$ et des dérivées secondes $\ddot{\sigma}_a$, $\ddot{\beta}_v$ et $\ddot{\Phi}_v$ à l'instant t,
(e) vérification des relations (4) et (6) en utilisant les valeurs de $V_p$, $\sigma_a$, $\beta_v$, $\Phi_v$, $\alpha$ et des dérivées premières $\dot{\sigma}_a$,

$\dot{\beta}_v$, $\dot{\Phi}_v$, $\dot{\alpha}$, et secondes $\ddot{\sigma}_a$ et $\ddot{\beta}_v$ et $\ddot{\Phi}_v$ à l'instant (t) calculées par l'opération (d), et
(f) élaboration d'un signal d'alarme lorsque l'une desdites relations (4) et (6) n'est pas vérifiée à une précision donnée.

**7.** Procédé selon la revendication 6 caractérisé en ce qu'il comprend, en outre, les opérations suivantes :

g) calcul à l'aide des relations (1), (3) et (5) des forces appliquées F, R et Z à l'aéronef à l'instant t en utilisant les valeurs des paramètres $V_p$, $\Phi_v$, $\sigma_a$, $\beta_v$, $\alpha$ à l'instant t, les valeurs des dérivées premières $\dot{V}_p$, $\dot{\Phi}_v$, $\dot{\sigma}_a$, $\dot{\beta}_v$, $\dot{\alpha}$ à l'instant t, calculées à partir de $V_p$, $\Phi_v$, $\sigma_a$, $\beta_v$ et $\alpha$ aux instants t et (t+dt) et les valeurs dérivées seconde-

s $\ddot{\sigma}_a$ et $\ddot{\beta}_v$ à l'instant t calculées à partir de $\sigma_a$ et $\beta_v$ aux instants t, (t+dt) et t+2dt,
(h) calcul à partir des paramètres de navigation $V_p$, $\Phi_v$, $\sigma_a$, $\beta_v$ et $\alpha$ à l'instant (t+dt) et des valeurs des forces appliquées obtenues par l'opération (g), des paramètres $\dot{V}_p$, $\dot{\Phi}_v$, $\dot{\sigma}_a$, $\dot{\beta}_v$, $\dot{\alpha}$, $\ddot{\Phi}_v$, $\ddot{\sigma}_a$, $\ddot{\beta}_v$ à l'instant (t+dt),

(i) calcul des paramètres $\dot{V}_p$, $\dot{\Phi}_v$, $\dot{\sigma}_a$, $\dot{\beta}_v$, $\dot{\alpha}_v$, $\ddot{\sigma}_a$ et $\ddot{\beta}_v$ à l'instant (t+dt) en utilisant les valeurs des paramètres $V_p$, $\Phi_v$, $\sigma_a$, $\beta_v$ et $\alpha$ aux instants, (t+dt) , (t+2dt) et (t+3dt),
(j) comparaison des valeurs des paramètres calculés par l'opération (h) avec celles calculées par l'opération (i),
(k) élaboration d'un signal d'alarme lorsque le résultat de la comparaison indique que l'une des valeurs comparées est différente au-delà d'un certain seuil.

**8.** Procédé selon la revendication 7, caractérisé en ce que dans l'opération (g) le calcul des forces appliquées à l'aéronef F, R et Z à l'instant t est effectué en utilisant les valeurs des paramètres $V_p$, $\Phi_v$, $\sigma_a$, $\beta_v$ et $\alpha$ à l'instant t et les valeurs des dérivées premières $\dot{V}_p$, $\dot{\Phi}_v$, $\dot{\sigma}_a$, $\dot{\beta}_v$, $\dot{\alpha}$ et des dérivés secondes $\ddot{\sigma}_a$, $\ddot{\beta}_v$ qui ont été calculées à l'instant t.

**9.** Procédé selon la revendication 8, caractérisé en ce qu'il comprend en outre l'opération suivante :

(1) sélection de la valeur du paramètre à retenir pour le calcul des forces F, R et Z, soit celle issue du calcul par les relations (15) à (22), soit celle issue du calcul par les relations (7) à 14) selon la valeur du signal d'alarme fournie par l'opération (k).

**10.** Procédé selon la revendication 9, caractérisé en ce que dans l'opération (h) le calcul des valeurs de $\overset{\cdot}{\sigma}'_a$ et $\overset{\cdot}{\beta}'_v$ à l'instant (t+dt) est effectué en résolvant les équations par une approximation successive dont les valeurs initiales sont celles de $\overset{\cdot}{\sigma}'_a$ et $\overset{\cdot}{\beta}'_v$ à l'instant t.

**11.** Procédé selon l'une des revendications 1 à 10 caractérisé en ce que les opérations sont effectuées à chaque instant séparé du précédent par un intervalle de temps dt.

**12.** Système pour mettre en oeuvre le procédé selon l'une des revendications 1 à 11 , caractérisé en ce qu'il comprend :

- des moyens pour fournir des signaux numériques qui sont représentatifs des informations de pilotage qui sont présentées au pilote,
- un premier calculateur pour calculer un ou plusieurs paramètres de navigation à partir desdits signaux numériques,
- un premier comparateur pour comparer les valeurs des paramètres de navigation fournies par le premier calculateur à celles des mêmes paramètres fournies par le dispositif de calcul et/ou par les instruments de bord et élaborer un signal d'alarme lorsque le résultat de la comparaison indique que les valeurs comparées sont différentes au-delà d'un certain seuil,
- un deuxième calculateur pour calculer un ou plusieurs paramètres capteurs à partir des valeurs des paramètres de navigation fournies soit par le dispositif de calcul, soit par le premier calculateur,
- un deuxième comparateur pour comparer les valeurs des paramètres capteurs fournies par le deuxième calculateur à celles fournies par les capteurs correspondants ou par les instruments de bord et élaborer un signal d'alarme lorsque le résultat de la comparaison indique que les valeurs comparées sont différentes au-delà d'un certain seuil.

**13.** Système selon la revendication 12, caractérisé en ce que les premier et deuxième calculateurs ainsi que les premier et deuxième comparateurs constituent un calculateur unique.

**14.** Système selon la revendication 12 ou 13, caractérisé en ce que les signaux numériques représentatifs des informations de pilotage qui sont présentées au pilote sont fournis directement par le générateur de symboles.

**15.** Système selon la revendication 12 ou 13, caractérisé en ce que les signaux numériques représentatifs des informations de pilotage qui sont présentées au pilote sont obtenus à partir des signaux de déviation et d'allumage du dispositif d'affichage.

**16.** Système selon la revendication 15, caractérisé en ce que les moyens pour fournir les signaux numériques représentatifs des informations de pilotage comprennent un convertisseur analogique/numérique des signaux de déviation et d'allumage pour obtenir des codes numériques, une mémoire d'image pour enregistrer lesdits codes numériques et un dispositif de traitement des codes numériques de la mémoire d'image pour obtenir lesdits signaux numériques.

**17.** Système selon la revendication 15, 16 ou 17 caractérisé en ce que les signaux numériques représentatifs des informations de pilotage sont obtenus à partir de l'image de l'écran du dispositif d'affichage.

**18.** Système selon la revendication 17, caractérisé en ce que les moyens pour fournir les signaux numériques représentatifs des informations de pilotage comprennent un dispositif de prise de vue de l'écran du dispositif d'affichage ou d'une copie dudit écran pour obtenir une image électronique de l'écran, un dispositif de codage numérique de l'image électronique, une mémoire pour enregistrer les codes numériques fournis par le dispositif de codage, un dispositif de traitement des codes contenus dans la mémoire pour identifier les réticules et les caractères alphanumériques associés et un dispositif de conversion des valeurs numériques associés aux réticules sous la forme desdits signaux numériques.

**Patentansprüche**

1. Verfahren zur Verbesserung der Sicherheit von Steuerungsinformationen für ein Luftfahrzeug, wobei die Informationen einerseits von Aufnehmern bereitgestellten Parametern und andererseits von einer Berechnungsvorrichtung zugeführten sogenannten Navigationsparametern entsprechen und dem Piloten entweder mittels Bordinstrumenten oder mittels eines Symbolgenerators dargeboten werden, der mit einer Vorrichtung zur Anzeige von Synthesebildern verbunden ist, die ein oder mehrere Fadenkreuze sowie alphanumerische Zeichen umfassen, und wobei das Verfahren durch die folgenden Schritte gekennzeichnet ist:

   (a) Erfassen und Erkennen von Synthesebildern durch die Analyse der Bilder selbst, um numerische Signale zu ermitteln, die die dem Piloten dargebotenen Steuerungsinformationen darstellen,

   (b) Berechnung eines oder mehrerer Navigationsparameter und/oder Aufnehmerparameter aus den numerischen Signalen,

   (c) Vergleich der berechneten Parameter mit den Werten derselben, durch die Berechnungsvorrichtung oder durch die Aufnehmer bereitgestellten Parameter, um die Inkohärenzen zwischen den verglichenen Parametern zu erfassen, und

   (d) Herbeiführen eines Alarmsignals, wenn eine oder mehrere Inkohärenzen eine bestimmte Schwelle überschreiten.

2. Verfahren nach Anspruch 1, dadurch gekennzeichnet, daß der Schritt (a) darin besteht, daß der Schirm der Anzeigevorrichtung oder eine Kopie dieses Schirms aufgezeichnet wird, daß ein Bild dieses Schirms festgehalten und in Form von numerischen Signalen in einem Speicher gespeichert wird, daß dieses Bild analysiert wird, um die Geometrie und die Werte des oder der Fadenkreuze und der alphanumerischen Zeichen zu identifizieren, und daß die numerischen Werte der dem Piloten auf dem Schirm der Anzeigevorrichtung dargebotenen Informationen bestimmt werden.

3. Verfahren nach Anspruch 1 oder 2, dadurch gekennzeichnet, daß der Schritt (c) ferner in einem Vergleich der berechneten Parameter mit den Werten derselben, durch die Bordinstrumente bereitgestellten Parameter besteht.

4. Verfahren nach Anspruch 1, 2 oder 3, dadurch gekennzeichnet, daß der Schritt (b) darin besteht, daß ein gleicher Parameter aus Gruppen von Fadenkreuzen und/oder verschiedenen alphanumerischer Zeichen berechnet wird.

5. Verfahren nach einem der vorangehenden Ansprüche 1 bis 4, dadurch gekennzeichnet, daß der Schritt (c) die folgenden Schritte umfaßt:

   (a) Berechnen von ersten Ableitungen $\dot{\sigma}_a$ und $\dot{\beta}_v$ zum Zeitpunkt t aus einem den Horizont darstellenden Navigationsparameter $\sigma_a$ und einem den aerodynamischen Fluglagewinkel darstellenden Navigationsparameter $\beta_v$ zu den Zeitpunkten t und (t + dt),
   (b) Berechnen der Gleichung (2) unter Verwendung der Werte der Parameter $V_p$, der die Fluggeschwindigkeit darstellt, $\phi_v$, $\sigma_a$ und $\beta_v$, die aerodynamische Fluglagewinkel zum Zeitpunkt t darstellen, und der ersten Ableitungen $\dot{\sigma}_a$ und $\dot{\beta}_v$ zum Zeitpunkt t, die in Schritt (a) berechnet wurden, und dadurch gekennzeichnet, daß der Schritt zur Erzeugung eines Alarmsignals den Schritt
   (c) Erzeugen eines Alarmsignals, wenn die Gleichung (2) nicht mit einer gegebenen Genauigkeit berechnet wird,

   umfaßt.

6. Verfahren nach Anspruch 5, gekennzeichnet durch die folgenden weiteren Schritte:

   (d) Berechnen der ersten Ableitungen $\dot{\sigma}_a$, $\dot{\beta}_v$, $\dot{\phi}_v$ und $\dot{\alpha}$ und der zweiten Ableitungen $\ddot{\sigma}_a$, $\ddot{\beta}_v$ und $\ddot{\phi}_v$ zum Zeitpunkt t aus den den Anstellwinkel darstellenden Navigationsparametern $\sigma_a$, $\beta_v$, $\phi_v$ und $\alpha$ zu den Zeitpunkten t, (t+dt) und (t+2dt),

   (e) Berechnen der Gleichungen (4) und (6) unter Verwendung der durch den Schritt (d) berechneten Werte von

$V_p$, $\sigma_a$, $\beta_v$, $\phi_v$ und $\alpha$, der ersten Ableitungen $\dot{\sigma}_a$, $\dot{\beta}_v$, $\dot{\phi}_v$ und $\dot{\alpha}$ und der zweiten Ableitungen $\ddot{\sigma}_a$, $\ddot{\beta}_v$ und $\ddot{\phi}_v$ zum Zeitpunkt (t), und

(f) Erzeugen eines Alarmsignals, wenn eine der Gleichungen (4) und (6) nicht mit einer gegebenen Genauigkeit berechnet wird.

7. Verfahren nach Anspruch 6, gekennzeichnet durch die folgenden weiteren Schritte:

(g) Berechnen der am Luftfahrzeug zum Zeitpunkt t angreifenden Kräfte F, R und Z unter Verwendung der Werte der Parameter $V_p$, $\sigma_a$, $\beta_v$, $\phi_v$ und $\alpha$ zum Zeitpunkt t, der Werte der ersten Ableitungen $\dot{V}_p$, $\dot{\sigma}_a$, $\dot{\beta}_v$, $\dot{\phi}_v$ und $\alpha$ zum Zeitpunkt t, die aus $V_p$, $\sigma_a$, $\beta_v$, $\phi_v$ und $\alpha$ zu den Zeitpunkten t und (t + dt) berechnet wurden, und den Werten der zweiten Ableitungen $\ddot{\sigma}_a$ und $\ddot{\beta}_v$ zum Zeitpunkt t, die aus $\sigma_a$ und $\beta_v$ zu den Zeitpunkten t, (t + dt) und (t + 2dt) berechnet wurden, mittels der Gleichungen (1), (3) und (5),

(h) Berechnen der Parameter $\dot{V}_p$, $\dot{\phi}_v$, $\dot{\sigma}_a$, $\dot{\beta}_v$, $\dot{\alpha}$, $\ddot{\sigma}_a$, $\ddot{\beta}_v$ und $\ddot{\phi}_v$ zum Zeitpunkt (t + dt) aus den Navigationsparametern $V_p$, $\sigma_a$, $\beta_v$, $\phi_v$ und $\alpha$ zum Zeitpunkt (t + dt) und den aus Schritt (g) erhaltenen Werten der angreifenden Kräfte,

(i) Berechnen der Parameter $\dot{V}_p$, $\dot{\phi}_v$, $\dot{\sigma}_a$, $\dot{\beta}_v$, $\dot{\alpha}$, $\ddot{\sigma}_a$ und $\ddot{\beta}_v$ zum Zeitpunkt (t + dt) unter Verwendung der Werte der Parameter $V_p$, $\sigma_a$, $\beta_v$, $\phi_v$ und $\alpha$ zu den Zeitpunkten (t + dt), (t + 2dt) und (t + 3dt),

(j) Vergleichen der Werte der in Schritt (h) berechneten Parameter mit den in Schritt (i) berechneten Werten, und

(k) Erzeugen eines Alarmsignals, wenn das Ergebnis des Vergleichs anzeigt, daß einer der verglichenen Werte jenseits einer bestimmten Schwelle unterschiedlich ist.

8. Verfahren nach Anspruch 7, dadurch gekennzeichnet, daß die Berechnung der an dem Luftfahrzeug angreifenden Kräfte F, R und Z zu dem Zeitpunkt t in Schritt (g) unter Verwendung der Werte der Parameter $V_p$, $\sigma_a$, $\beta_v$, $\phi_v$ und $\alpha$ zum Zeitpunkt t und der Werte der ersten Ableitungen $\dot{V}_p$, $\dot{\sigma}_a$, $\dot{\beta}_v$, $\dot{\phi}_v$ und $\dot{\alpha}$ sowie die Werte der zweiten Ableitungen

$\ddot{\sigma}_a$ und $\ddot{\beta}_v$, die zum Zeitpunkt t berechnet wurden, erfolgt.

9. Verfahren nach Anspruch 8, gekennzeichnet durch die folgenden weiteren Schritte:

(l) Auswahl des Wertes des zur Berechnung der Kräfte F, R und Z festzuhaltenden Parameters aus entweder dem Ergebnis der Berechnung durch die Gleichungen (15) bis (22) oder dem Ergebnis der Berechnung durch die Gleichungen (7) bis (14) entsprechend dem Wert des durch den Schritt (k) bereitgestellten Alarmsignals.

10. Verfahren nach Anspruch 9, dadurch gekennzeichnet, daß in Schritt (h) die Berechnung der Werte von $\ddot{\sigma}_a$ und

$\ddot{\beta}_v$ zum Zeitpunkt (t + dt) unter Lösung der Gleichung durch eine sukzessive Approximation erfolgt, deren Anfangswerte die Werte von $\ddot{\sigma}_a$ und $\ddot{\beta}_v$ zum Zeitpunkt t sind.

11. Verfahren nach einem der Ansprüche 1 bis 10, dadurch gekennzeichnet, daß die Schritte zu jedem Zeitpunkt um eine Zeitdauer dt zu dem vorangehenden Schritt beabstandet ausgeführt werden.

12. System zur Anwendung des Verfahrens nach einem der Ansprüche 1 bis 11, gekennzeichnet durch

- Mittel zum Bereitstellen numerischer Signale, die dem Piloten dargebotene Steuerungsinformationen darstellen,

- einen ersten Rechner zum Berechnen eines oder mehrerer Navigationsparameter aus den numerischen Signalen,

- einen ersten Vergleicher zum Vergleichen der Werte der durch den ersten Rechner bereitgestellten Navigationsparameter mit den Werten der gleichen, durch die Berechnungsvorrichtung und/oder durch die Bordinstrumente bereitgestellten Parameter, und zum Erzeugen eines Alarmsignals, wenn das Vergleichsergebnis anzeigt, daß die verglichenen Werte jenseits einer bestimmten Schwelle verschieden sind,

- einen zweiten Rechner zum Berechnen eines oder mehrerer Aufnehmerparameter aus den Werten der entweder durch die Berechnungsvorrichtung oder durch den ersten Rechner bereitgestellten Navigationsparameter,

- einen zweiten Vergleicher zum Vergleichen der durch den zweiten Rechner bereitgestellten Werte der Aufnehmerparameter mit den durch die entsprechenden Aufnehmer oder durch die Bordinstrumente bereitgestellten Werten und zum Erzeugen eines Alarmsignals, wenn das Vergleichsergebnis anzeigt, daß die verglichenen Werte jenseits einer bestimmten Schwelle verschieden sind.

13. System nach Anspruch 12, dadurch gekennzeichnet, daß der erste und der zweite Rechner sowie der erste und der zweite Vergleicher einen Einheitsrechner bilden.

14. System nach Anspruch 12 oder 13, dadurch gekennzeichnet, daß die dem Piloten dargebotene Steuerungsinformationen darstellenden numerischen Signale direkt durch den Symbolgenerator bereitgestellt werden.

15. System nach Anspruch 12 oder 13, dadurch gekennzeichnet, daß die die dem Piloten dargebotene Steuerungsinformationen darstellenden numerischen Signale aus Abweichungs- und Leuchtsignalen der Anzeigevorrichtung ermittelt werden.

16. System nach Anspruch 15, dadurch gekennzeichnet, daß die Mittel zum Bereitstellen der Steuerungsinformationen darstellenden numerischen Signale einen Analog-Digital-Umsetzer für die Abweichungs- und Leuchtsignale zum Ermitteln numerischer Codes, einen Bildspeicher zum Speichern der numerischen Codes und eine Vorrichtung zum Verarbeiten der numerischen Codes des Bildspeichers zum Ermitteln der numerischen Signale umfassen.

17. System nach Anspruch 15, 16 oder 17, dadurch gekennzeichnet, daß die die Steuerungsinformationen darstellenden numerischen Signale aus dem Schirmbild der Anzeigevorrichtung ermittelt werden.

18. System nach Anspruch 17, dadurch gekennzeichnet, daß die Mittel zum Bereitstellen der die Steuerungsinformationen darstellenden numerischen Signale eine Vorrichtung zum Aufzeichnen des Schirmbilds der Anzeigevorrichtung oder einer Kopie dieses Schirms zum Ermitteln eines elektronischen Bilds des Schirms, eine Vorrichtung zum numerischen Codieren des elektronischen Bilds, einen Speicher zum Speichern der durch die Codiervorrichtung bereitgestellten numerischen Codes, eine Vorrichtung zur Verarbeitung der in dem Speicher enthaltenen Codes zum Erkennen der Fadenkreuze und der zugeordneten alphanumerischen Zeichen, und eine Vorrichtung zum Umsetzen der den Fadenkreuzen in Form der numerischen Signale zugeordneten numerischen Werte umfassen.

## Claims

1. Method of producing and checking data for piloting an aircraft, these data being on the one hand parameters provided by sensors and, on the other, what are known as navigation parameters, provided by a calculating device and being presented to the pilot either by means of panel instruments or by means of a symbol generator linked to a synthesised image display device which comprises one or several reticles as well as alpha-numeric characters, the said method being characterised in that it includes the following operations:

    (a) detecting and recognising synthesised images by analyzing the images themselves so as to produce digital signals representing piloting data presented to the pilot,
    (b) calculating one or several navigation parameters and/or sensor parameters from the said digital signals,
    (c) comparing the said calculated parameters with values of the same parameters supplied by the calculating device or by the sensor in order to detect any inconsistencies between the compared parameters,
    (d) generating an alarm signal when one or several inconsistencies exceed a given threshold.

**2.** Method as claimed in claim 1, characterised in that operation (a) consists in filming the screen of the display device or a copy of the said screen, retaining an image of the said screen and recording it in the form of digital signals in a memory, analyzing this image in order to identify the geometry and the values of the reticle or reticles and alpha-numeric characters and determining the digital values of the data presented to the pilot on the screen of the display device.

**3.** Method as claimed in claim 1 or 2, characterised in that, in addition, operation (c) consists in comparing the said calculated parameters to the values of the same parameters supplied by the panel instruments.

**4.** Method as claimed in claims 1, 2 or 3, characterised in that operation (b) consists in calculating a same parameter from different groups of reticles and/or alpha-numeric characters.

**5.** Method as claimed in one of the previous claims 1 to 4, characterised in that operation (c) includes the following operations:

(a) from navigation parameters $\sigma_a$ representing the horizon and $\beta_v$ representing an angle of aerodynamic attitude at instants t and (t+dt), calculating the derivatives of the first order $\dot{\sigma}_a$, $\dot{\beta}_v$, at instant t.

(b) verifying the relationship (2) by using the values of the parameters $V_p$ representing the aerodynamic speed, $\phi_v$, $\sigma_a$ and $\beta_v$, representing angles of aerodynamic attitudes at instant t and the derivatives of the first order $\dot{\sigma}_a$ and $\dot{\beta}_v$ at instant t calculated by operation (a), and characterised in that the operation whereby an alarm signal is produced includes an operation in which:

(c) an alarm signal is generated when the relationship (2) is not verified to within a given degree of accuracy.

**6.** Method as claimed in claim 5, characterised in that, in addition, it includes the following operations:

(d) from the navigation parameters $\sigma_a$, $\beta_v$, $\phi_v$ and $\alpha$, representing the angle of incidence at instants t, (t+dt) and (t+2dt), calculating the derivatives of the first order $\dot{\sigma}_a$, $\dot{\beta}_v$, $\dot{\phi}_v$ and $\dot{\alpha}$ and the derivatives of the second order

$\ddot{\sigma}_a$, $\ddot{\beta}_v$ and $\ddot{\phi}_v$ at instant t,

(e) verifying the relationships (4) and (6), using the values $V_p$, $\sigma_a$, $\beta_v$, $\phi_v$, $\alpha$, and the first $\dot{\sigma}_a$ $\dot{\beta}_v$, $\dot{\phi}_v$, $\dot{\alpha}$ and second

order derivatives $\ddot{\sigma}_a$ and $\ddot{\beta}_v$ and $\ddot{\phi}_v$ at instant (t) as calculated by operation (d), and

(f) generating an alarm signal if one of these said relationships (4) and (6) is not verified to within a given degree of accuracy.

**7.** Method as claimed in claim 6, characterised in that, in addition, it includes the following operations:

(g) with the aid of relationships (1), (3) and (5), calculating the forces applied F, R and Z to the aircraft at instant t using the values of the parameters $V_p$, $\phi_v$, $\sigma_a$, $\beta_v$, $\alpha$ at instant t, the values of the derivatives of the first order $\dot{V}_p$, $\dot{\phi}_v$, $\dot{\sigma}_a$, $\dot{\beta}_v$, $\dot{\alpha}$ at instant t calculated from $V_p$, $\phi_v$, $\sigma_a$, $\beta_v$ and $\alpha$ at instants t and (t+dt) and the values of the derivatives of the second order $\ddot{\sigma}_a$ and $\ddot{\beta}_v$ at instant t calculated from $\sigma_a$ and $B_v$ at instants t, (t+dt) and t+2dt,

(h) from the navigation parameters $V_p$, $\phi_v$, $\sigma_a$, $\beta_v$ and $\alpha$ at instant (t+dt) and the values of the applied forces obtained by operation (g), calculating the parameters $\dot{V}_p$, $\dot{\phi}_v$, $\dot{\sigma}_a$, $\dot{\beta}_v$, $\dot{\alpha}$, $\ddot{\phi}_v$, $\ddot{\sigma}_a$, $\ddot{\beta}_v$ at instant (t+dt),

(i) calculating the parameters $\dot{V}_p$, $\dot{\phi}_v$, $\dot{\sigma}_a$, $\dot{\beta}_v$, $\dot{\alpha}_v$, $\ddot{\sigma}_a$ and $\ddot{\beta}_v$ at instant (t+dt) using the values of the parameters $V_p$, $\phi_v$, $\sigma_a$, $\beta_v$ and $\alpha$ at instants (t+dt), (t+2dt) and (t+3dt),

(j) comparing the values of the parameters calculated by operation (h) with those calculated by operation (i),

(k) generating an alarm signal if the result of the comparison indicates that one of the values compared differs beyond a certain threshold.

8. Method as claimed in claim 7, characterised in that during operation (g), the forces applied to the aircraft F, R and Z at instant t are calculated using the values of the parameters $V_p$, $\phi_v$, $\sigma_a$, $\beta_v$ and $\alpha$ at instant t and the values of the derivatives of the first order $\dot{V}_p$, $\dot{\phi}_v$, $\dot{\sigma}_a$, $\dot{\beta}_v$, $\dot{\alpha}$ and the derivatives of the second order $\ddot{\sigma}_a$, $\ddot{\beta}_v$ which were calculated at instant t.

9. Method as claimed in claim 8, characterised in that, in addition, it also includes the operation of:

   (l) selecting the value of the parameter to be retained for calculating forces F, R and Z from either that resulting from the calculation performed by the relationships (15) to (22) or that resulting from the calculation performed by the relationships (7) to (14), depending on the value of the alarm signal supplied by operation (k).

10. Method as claimed in claim 9, characterised in that in operation (h), the values of $\ddot{\sigma}_a$ and $\ddot{\beta}_v$ at instant (t+dt) are calculated by solving the equations by means of a successive approximation, the initial values of which are those of $\ddot{\sigma}_a$ and $\ddot{\beta}_v$ at instant t.

11. Method as claimed in one of claims 1 to 10, characterised in that the operations are performed at each instant separated from the previous instant by a time interval dt.

12. System for implementing the method as claimed in one of claims 1 to 11, characterised in that it comprises:

   - means for supplying digital signals representing the piloting data that are presented to the pilot,
   - a first processor to calculate one or several navigation parameters from these digital signals,
   - a first comparator to compare the values of the navigation parameters supplied by the first processor with those of the same parameters supplied by the calculating device and/or by the panel instruments and to generate an alarm signal if the result of the comparison indicates that the compared values differ beyond a certain threshold,
   - a second processor to calculate one or several sensor parameters from the values of the navigation parameters supplied either by the calculating device or by the first processor,
   - a second comparator to compare the values of the sensor parameters supplied by the second processor with those supplied by the corresponding sensors or by the panel instruments and generate an alarm signal if the result of the comparison indicates that the compared values differ beyond a certain threshold.

13. System as claimed in claim 12, characterised in that the first and second processors as well as the first and second comparators constitute a single processing unit.

14. System as claimed in claim 12 or 13, characterised in that the digital signals representing the piloting data presented to the pilot are supplied directly by the symbol generator.

15. System as claimed in claim 12 or 13, characterised in that the digital signals representing the piloting data presented to the pilot are obtained from the deviation and illumination signals of the display device.

16. System as claimed in claim 15, characterised in that the means for supplying the digital signals representing the piloting data comprise an analogue to digital convertor for the deviation and illumination signals to produce the digital codes, an image memory to record the said digital codes and a device for processing the digital codes from the image memory to produce the said digital signals.

17. System as claimed in claim 15, 16 or 17, characterised in that the digital signals representing the piloting data are produced from the screen image of the display device.

18. System as claimed in claim 17, characterised in that the means for supplying the digital signals representing the piloting data comprise a device for taking a screen capture from the screen of the display device or a copy of the screen to produce an electronic image of the screen, a device for digitally encoding the electronic image, a memory for recording the digital codes supplied by the encoding device, a device for processing the codes contained in the memory to identify the associated reticles and alpha-numeric characters and a device for converting the digital values associated with the reticles in the form of the said digital signals.

FIG.1

EP 0 490 745 B1

FIG. 2

FIG. 3

VERS 15 (FIG.1)

FIG. 4

FIG. 5 a

FIG. 5 b

TRAJECTOIRE

FIG. 5 c

FIG. 6 a

FIG. 6 b

FIG. 6 c

FIG. 6 d

FIG. 7

FIG. 8

EP 0 490 745 B1

(t)

100

$V_P, \Phi_V, \overline{v}_a, \beta_V, \alpha$

(t + dt)

108

$V_P, \Phi_V, \overline{v}_a, \beta_V, \alpha$

(t + 2 dt)

110

$V_P, \Phi_V, \overline{v}_a, \beta_V, \alpha$

(t + 3 dt)

111

$V_P, \Phi_V, \overline{v}_a, \beta_V, \alpha$

RELATIONS

(1)(3)(5)

103

(7)...(14)

RELATIONS

104

21

$\dot{V}_P, \dot{\Phi}_V, \dot{\overline{v}}_a, \dot{\beta}_V, \dot{\alpha}, \dot{\Phi}_V \mid \ddot{\overline{v}}_a, \ddot{\beta}_V$

102

$\dot{V}_P, \dot{\Phi}_V, \dot{\overline{v}}_a, \dot{\beta}_V, \dot{\alpha}, \dot{\Phi}_V \mid \ddot{\overline{v}}_a, \ddot{\beta}_V$

105

39

109

(15) ... (22)

112

RELATIONS

(15) ... (22)

106

21

FIG. 9